# EUROPEAN PATENT SPECIFICATION

(11) **EP 0 859 661 B1**
(45) Date of publication and mention of the grant of the patent: **16.05.2001**
(21) Application number: 96933842.5
(22) Date of filing: 23.09.1996
(51) Int. Cl.: B01J 19/00

(54) **APPARATUS AND PROCESS FOR MULTIPLE CHEMICAL REACTIONS**
VORRICHTUNG UND VERFAHREN FÜR MEHRFACHEN CHEMISCHEN REAKTIONEN
APPAREIL ET PROCEDE POUR REACTIONS CHIMIQUES MULTIPLES

(30) Priority: 22.09.1995 US 532279
(43) Date of publication of application: 26.08.1998
(73) Proprietor: BERLEX LABORATORIES, INC., Richmond, CA 94804-0099 (US)
(72) Inventor: MOHAN, Raju, Moraga, CA 94556 (US); BUCKMAN, Brad, O., Oakland, CA 94602 (US); MORRISSEY, Michael, M., Danville, CA 94506 (US); CHITTY, Andrew, I., West Linn, OR 97068 (US); MARTIN, John, T., Portland, OR 97201 (US)
(74) Representative: Prüfer, Lutz H., Dipl.-Phys.
(86) International application number: US9615124
(87) International publication number: WO9710896

(56) References cited:
- EP-A- 0 542 422
- WO-A-90/02605
- WO-A-91/07504
- WO-A-94/18226
- WO-A-95/11262
- WO-A-95/12608
- DE-A- 4 008 085
- GB-A- 2 177 200
- E.GIRALT & D. ANDREU (EDS.): "Proceedings of the Twenty-First European Peptide Symposium September 2-8 1990 Platja d'Aro Spain" 1991 , ESCOM , LEIDEN, NL XP002022349 190790 H. Gausepohl et al.: "A multiple reaction system for automated simultaneous peptide synthesis" see page 206 - page 207
- PATENT ABSTRACTS OF JAPAN vol. 8, no. 86 (P-269), 19 April 1984 & JP,A,59 000638 (TOKYO SHIBAURA DENKI K.K.), 5 January 1984, & DATABASE WPI Section Ch, Week 8913 Derwent Publications Ltd., London, GB; Class B04, AN 89-098131 & JP,A,59 000 638 (TOSHIBA K.K. & DENKA SEIKEN K.K.) , 5 January 1984

## Description

### Field of the Invention

The invention relates to an apparatus and process for performing multiple chemical reactions, in particular for performing multiple solid phase chemical synthesis reactions and for isolating and collecting the final products of chemical reactions.

### Background of the Invention

One of the key processes in solid phase chemical synthesis is the washing of the solid support resin which has a chemical template attached thereto. Multiple washing cycles with different solvents ensures that all excess reagents used during reaction cycles are washed from the resin. A typical protocol involves addition of a wash solvent, shaking the resin with the solvent for five minutes and then removing the wash solvent from the reaction vessel. In many instances, the wash solvent is drained from the bottom of the reaction vessel by applying a vacuum, i.e., filtering the resin free of the waste solvent. The task is further complicated when multiple solid phase syntheses are simultaneously carried out.

For example, if each reaction vessel is to be subjected to a filtration step, performing separate filtration on each individual reaction vessel can be very time consuming. Alternatively, if filtering is to be performed on all of the reaction vessels simultaneously, this can lead to a very complicated and awkward arrangement of apparatus with, for example, each individual reaction vessel being connected to a vacuum source by a separate vacuum hose.

As described above, the waste liquid is flushed out during the washing cycles typically by vacuum filtration. During reaction cycles, however, the solvent and the reagents are to be retained in the reaction vessel which by design has a filter at the bottom. Previously, when batch filtering from several sources, each source was connected to the filter by a line with each line having a stop-cock or valve to regulate drainage.

Furthermore, from H. Gausepohl et al.: "A multiple reaction system for automated simultaneous peptide synthesis" in Proceedings of the Twenty-First European Peptide Symposium, September 2 - 8, 1990, Platja d'Oro (Spain), pages 206/207 a vessel retaining member in the form of a block of material with reaction vessels is known. It comprises a drainage member and a valve system that allows simultaneous draining of fluids from several reaction vessels.

From DE 4 008 085 A it is known, in such a case to carry out a simultaneous operation of the valves.

### Summary of the invention

Thus, it is an object of the invention to provide a reaction grid system and a vial retaining block assembly in combination with such a reaction grid system for performing multiple chemical reactions on solid support in a parallel fashion which provide a stable support for multiple reaction vessels and permit such tasks as washing and filtering to be formed simultaneously on all the reaction vessels in a simple and easy manner through a manyfold design. A further object is to provide cleaving reaction products from the solid support and separately collecting the reaction products from each of the individual reaction vessels.

These objects are solved by a reaction grid system as set forth in claim 1 or in claim 17, or by a vial retaining block assembly in combination with such a reaction grid system as set forth in claim 12 or in claim 21.

Preferred developments can be taken from the respective dependent claims.

### Brief Description of the Drawings

Various other objects, features and attendant advantages of the present invention will be more fully appreciated as the same becomes better understood when considered in conjunction with the accompanying drawings, in which like reference characters designate the same or similar parts throughout the several views, and wherein:
**Figure 1** is a side perspective view of an apparatus configured according to the present invention for supporting ninety-six reaction vessels, one of which is shown in enlarged isolation, in order to practice the process of the present invention;
**Figure 2** is a perspective view of a valved manifold plate or block used with the apparatus of Figure 1;
**Figure 3A** is a side elevation of one of ninety-six valve inserts mounted in the manifold plate or block of Figure 2;
**Figure 3B and 3C** are side views of a valve stem used with an aligned array of valve inserts in the valved manifold plate of Figure 2;
**Figure 4** is a top view of a valve manifold assembly with a multi-valve operator;
**Figure 5** is a side view of the valve manifold assembly of Figure 4;
**Figure 6** is an end view of the valve manifold assembly of Figures 4 and 5;
**Figure 7** is a top view of a channel block used in conjunction with the valve manifold assembly of Figures 2-6 in the manner shown in Figure 1 and in Figures 32-34;
**Figure 8** is a side view of the channel block of Figure 7;
**Figure 9** is an end view of the channel block of Figures 7 and 8;
**Figure 10** is a top view of a cap system plate assembly used with the manifold assembly of Figures 2-6 and the channel block assembly of Figures 7-9;
**Figure 11** is a side view of the cap plate assembly of Figure 10;
**Figure 12** is an end view of the cap plate assembly of Figures 10 and 11;
**Figure 13** is a top view of a vortexer mounting plate upon which the manifold assembly of Figures 2-6, channel block assembly of Figures 7-9 and cap system of Figures 10-11, when assembled with one another, are mounted for agitation or stirring;
**Figure 14** is a side view of the vortexer mounting plate of Figure 13;
**Figure 15** is an end view of the vortexer mounting plate of Figures 13 and 14;
**Figure 16** is a bottom view of a thermal block used with a reaction grid assembly shown in Figure 1;
**Figure 17** is a bottom view of the thermal block assembly of Figure 16;
**Figure 18** is an end view of the thermal block assembly of Figures 16 and 17;
**Figure 19** is a side view of the reaction grid assembly ready for loading by a robotic loader;
**Figure 20** is a side view of the reaction grid assembly with a wash system mounted thereon;
**Figure 21** is a side view showing the reaction grid assembly mounted on a vortexer;
**Figure 22** is a side view showing the reaction grid assembly and wash system mounted on the vortexer;
**Figure 23** is a side view showing the cleavage system mounted on the vortexer;
**Figure 24** is a top view of a vial rack assembly utilized with a cleavage system employed to collect reaction products after the reaction in the reaction vessels is complete;
**Figure 25** is a side view of the vial rack assembly;
**Figure 26** is an end view of the vial rack assembly of Figures 16 and 17;
**Figure 27** is an exploded view, in perspective, of a preferred embodiment in which a composite vial rack having four sections mounted in the cleavage block;
**Figure 28** is an exploded view showing the four vial rack section and a rack mounting tray of Figure 27;
**Figure 29** is a top view of a cleavage system assembly which is comprised of the valve manifold assembly of Figures 4-6, and a cleavage block of Figures 35-37 which receives the vial rack assembly therein and the channel system assembly thereon;
**Figure 30** is a side view of the cleavage system assembly of Figure 29;
**Figure 31** is an end view of the cleavage system assembly of Figures 29 and 30;
**Figure 32** is a top view of a reaction grid assembly which comprises the valve manifold assembly of Figures 4-6 and the channel block assembly of Figures 7-9 retained together with fasteners;
**Figure 33** is a side view of the reaction grid assembly of Figure 32;
**Figure 34** is an end view of the reaction grid assembly of Figures 32 and 33;
**Figure 35** is a top view of a cleavage block used with the assembly of Figures 28-31;
**Figure 36** is a side view of the cleavage block of Figure 35;
**Figure 37** is an end view of the cleavage block of Figures 35 and 36;
**Figure 38** is a top view of a robot deck mounting plate used to mount the reaction grid assembly while loading the vials of the reaction grid;
**Figure 39** is a front view of the robot deck mounting plate of Figure 38;
**Figure 40** is an end view of the robot deck mounting plate of Figures 38 and 39;
**Figure 41** is a top view of a wash system manifold assembly used with the system of Figure 1;
**Figure 42** is a side view of the wash system manifold assembly of Figure 41;
**Figure 43** is an end view of the wash system manifold assembly of Figures 41 and 42;
**Figure 44** is a diagrammatical view of a wash dispensing system;
**Figure 45** is a diagrammatical view of a suction system for removing liquid from the assembly of Figure 1; and
**Figure 46** is a diagrammatical view of a valve actuating system.

### Detailed Description of the Drawings

### Reaction Grid Structure

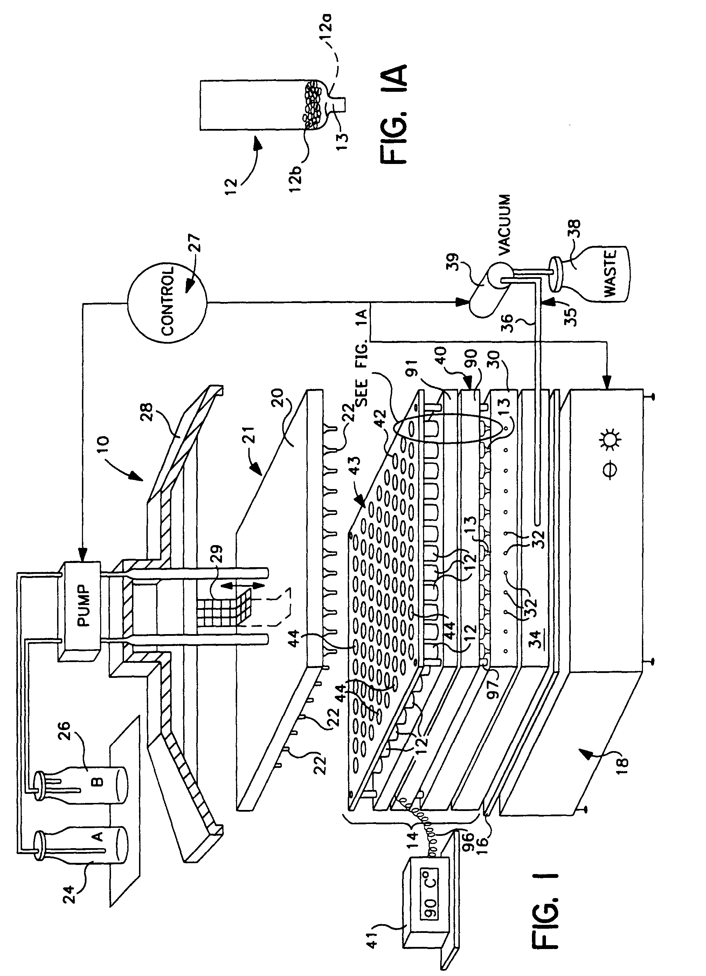

Referring now to Figure 1, there is shown a reaction station system 10, in accordance with the present invention, having an 8x12 array of reaction stations arranged in twelve columns and eight rows with each reaction station associated with a single reaction vessel 12 having a syringe tip 13. Each of the reaction vessels 12 is of a generally known configuration and includes a filter 12a at a syringe tip 13 above which is a fritt 12b is configured as solid support beads upon which chemical templates are attached via appropriate linkers, The filter 12a normally holds liquids such as solvents and reaction products in the reaction vessel 12. As will be explained hereinafter, application of a partial vacuum to the syringe tip 13 evacuates these liquids from the plurality of reaction vessels 12 simultaneously.

Generally, the reaction station system 10 is comprised of a reaction grid assembly 14 which is fixed to a universal mounting plate 16 that is in turn attached to a vortexer 18. The vortexer 18 stirs the contents of the reactor vessels 12 by imparting a circular motion to the reaction grid 14.

Above the reaction grid 14 is a fluid delivery manifold 20 forming part of a liquid delivery system 21 which has an array of ninety-six injection probes in the form of needles 22 each of which is aligned with a separate reaction station for dispensing washing solvent from reservoirs 24 and 26 to the reaction vessels 12. Operation of the liquid delivery system 21 is controlled by a PLC controller 27. The reaction grid 14 and fluid delivery manifold 20 are covered by an exhaust hood 28,

The fluid delivery manifold 20 is preferably mounted on a wall or other support by an elevator system 29 which lowers and raises the fluid delivery manifold to deliver fluid to the reaction vessels via the needles 22. While the vortexer 18 is agitating the contents within the reaction vessels 12, the needles 22 are withdrawn from the reaction vessels 12 and spaced from the reaction grid 14,

The reaction grid 14 includes a manifold valve block 30 with the rows of valve operators 32 therein aligned with separate rows of valves for each reaction vessel so that the reaction vessels can be closed to retain solvents therein during the reaction stage of the process. The manifold valve block 30 also receives the syringe tip 13 of each reaction vessel 12. Beneath manifold block 30 is a channel block 34 which has channels therein for draining fluid out of the system via a drainage system 35. The drainage system 35 includes an exhaust line 36 connected to a waste vessel 38 and a vacuum pump which draws fluid from the reaction vessels 12 after the valves in the manifold valve block 30, operated by the valve operators 32, have been opened. The controller 27 which operates the washing system 21, may also be used to operate the drainage system 35.

A thermal control block 40 with ninety-six apertures therethrough surrounds each one of the reaction vessels 12 to control the temperature of the reaction by either heating the contents of the reaction vessels or cooling the contents of the reaction vessels during the reaction.

A capping plate 42 overlies the open tops of the reaction vessels 12 and seals each reaction vessel. The capping plate 42 is part of a capping assembly 43 and includes ninety-six holes 44 therethrough, each of which holes is sealed by a silicon rubber septum sheet which is disposed between the capping plate 42 and the open tops of the reaction vessels 12, The needles 22 each simultaneously puncture the sealing material aligned with the holes 44 to deliver solvent to the reaction vessels. After the solvent has been delivered to the reaction vessels 12, the fluid delivery manifold 20 is raised and the vortexer 18 agitates the ninety-six solutions in the ninety-six reaction vessels 12 for a selected period of time. Upon conclusion of the agitation, the valves operated by the valve operators 32 are opened and the washing fluid is drawn off through line 36. Fluid treatment may be repeated a number of times with the same or different fluids, depending on the reaction sought in the reaction vessels 12 whether the reaction is anticipated or unanticipated. The reaction block 14 is disposed between the fluid dispensing system 21 and the drainage system 35 which are configured to facilitate rapid and convenient fluid treatment and processing of the contents in the reaction vessels 12, The reaction station concept having been thus far described broadly, the following description sets forth in greater detail the structure and function of the various components shown in Figure 1.

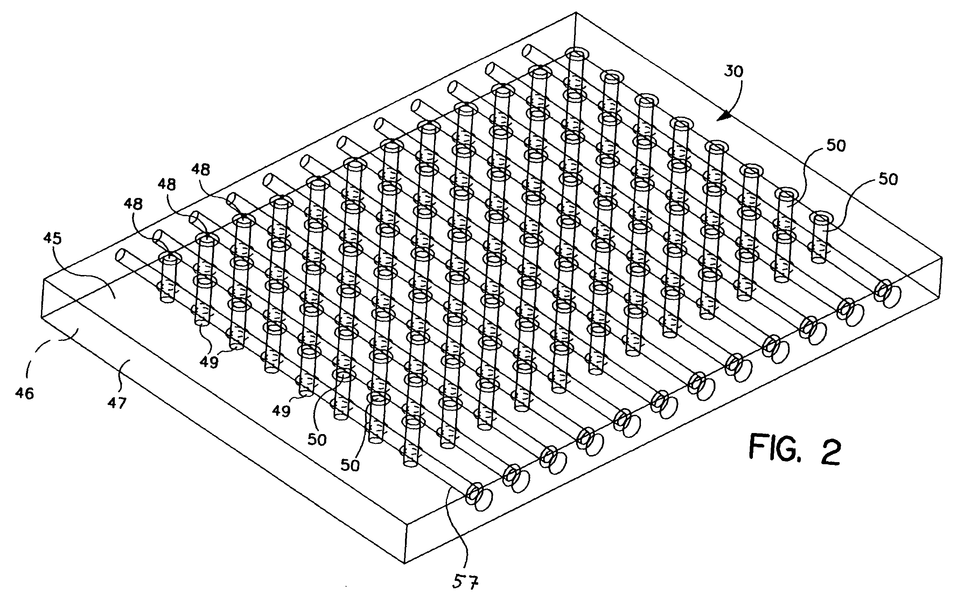

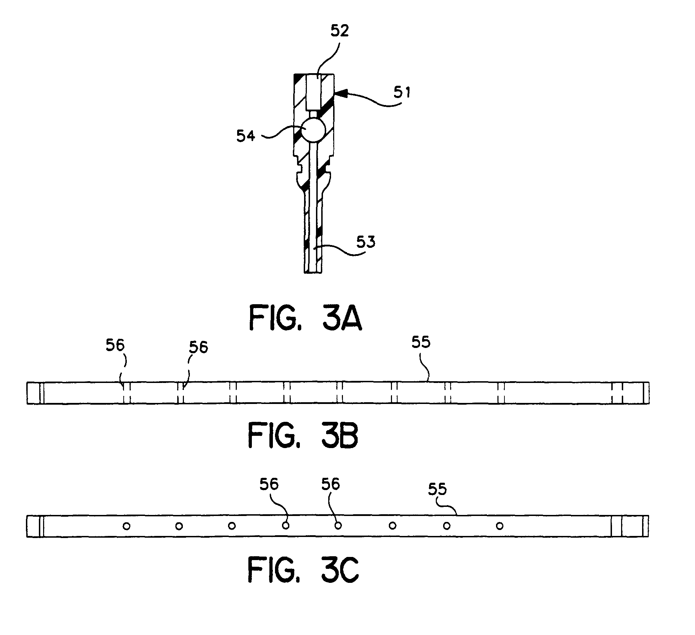

Referring now to Figures 2 and 3A-C, where the manifold valve block 30 and associated insert valves are shown, it is seen that the manifold plate is in the form of a first polypropylene block having an upper surface 45, a lower surface 46 and side surfaces 47 with inlets 48 through the upper surface 45 and outlets 49 through the lower surface 46. The inlets and outlets 48 and 49 are each connected by first passages 50, each of which first passages 50 receives a valve insert 51 (Figure 3A). Each valve insert 51 has a female Luer connector 52 at the top and a male Luer connector 53 at the bottom. Each female Luer connector 52 serves as an inlet into the manifold valve block 30 and receives the syringe tip 13 of one reaction vessel 12. Each male Luer connector 53 serves as an outlet for fluid passage from the manifold valve block 30. Each valve insert 51 further includes a lateral bore 54 therethrough which receives a valve stem 55 (see Figures 3B and 3C). The valve stem 55 is a rod having transverse holes 56 therethrough which are aligned with the axes of the female and male Luer connectors to allow for liquid to drain through the valve inserts 51 and are misaligned with the Luer connectors by rotation of the valve stems 55 to block the flow of liquid through the valve inserts. By rotating the valve stems 55, eight of the valve inserts 51 can be opened and closed simultaneously. The valve stems are received in second passages 57 through the block which intersect the first passages 50 and allow access to a plurality of first passages by a valve stem 55.

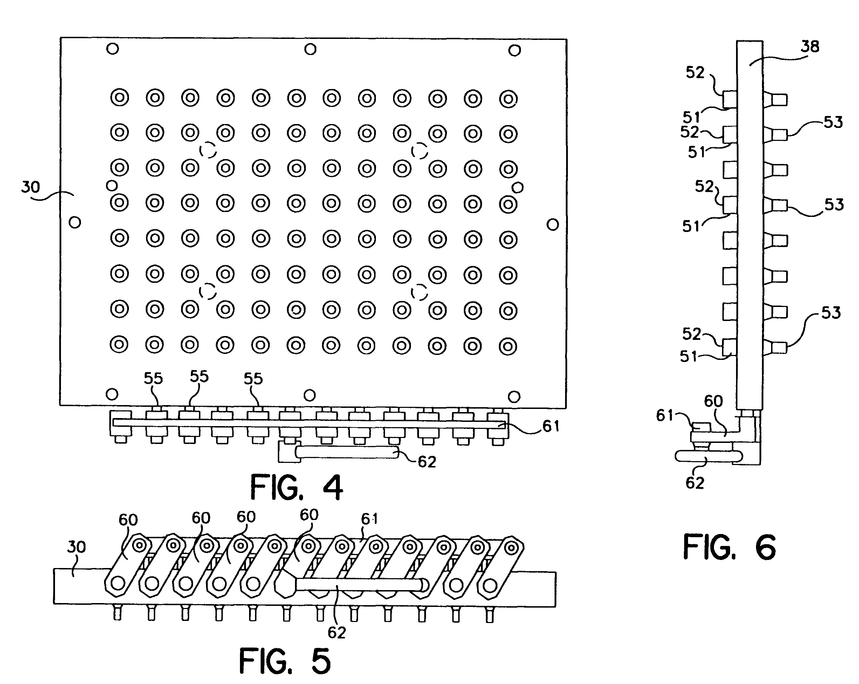

Referring now to Figures 4-6, there is shown an arrangement for operating all twelve of the valve stems 55 simultaneously so as to simultaneously block drainage from or allow drainage from the ninety-six reaction vessels 12 simultaneously. This is accomplished by fixing a link 60 non-rotatably to each valve rod 55 and connecting the links 60 to an actuator link 61. When one of the links 60 is opened or closed by rotating a handle 62, then the actuator link 61 causes every link 60 to rotate, closing or opening each of the ninety-six valve inserts 51 simuitaneously.

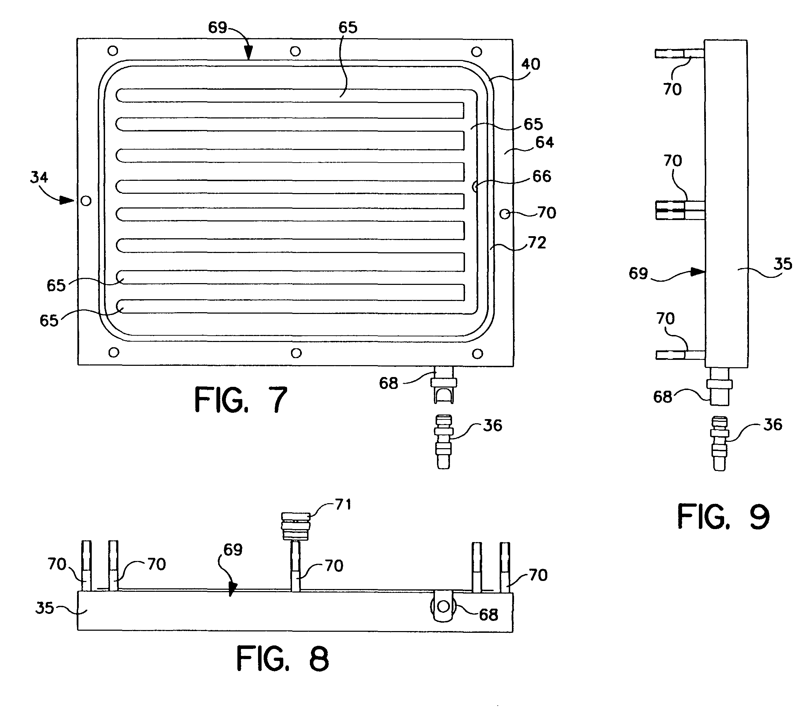

Referring now to Figures 7-9, a second polypropylene block in the form of the channel block 34 is shown. The channel block 34 is a drainage block which is assembled together with the manifold valve block 30 for collecting waste fluid drained from the reaction vessels 12. The channel block 34 has a cavity therein defined by a series of interconnected channels 65 aligned with the female Luer connectors 53 of the valve inserts 51 in the manifold valve block 30 so that when the valve inserts are opened, the liquid therein simultaneously drains into the array of interconnected channels. There is a drain hole 66 in the array of interconnected channels which is connected by fluid passages in the channel block 34 to a quick connect drain fitting 68 that is in turn connected by the line 36 (see Figure 1) to a waste collector 68. Liquids, such as solvents in the reaction vessels 12 are pulled through the filters 12a in the reaction vessels 12 (see Figure 1) by a vacuum pump 39 (see Figure 1).

The channel block 34 has a face 69 with a surface groove therein which surrounds the area containing the open interconnected channels 65. The groove retains a gasket 72 therein. The gasket 72 seals with the bottom surface of the manifold valve block 30 so that when liquid is drained from the reaction vessels 12 through the valve inserts 51, it does not leak outside of the system 10. The channel block includes eight posts 70 which extend therefrom and pass through holes in the manifold valve block 30 to properly position the manifold valve plate with respect to the channel block. The assembly of the manifold valve block 30, or first block, and the channel block 34, or second block, is held tightly engaged by quick tighteners 71 which are received over and tightened about the posts 70. The face 69 is a coupling face allowing rapid assembly with the bottom surface 46 of the manifold valve block 30 which, in essence, provides a coupling face for the vessel retaining member (the manifold block 30) that mounts the reaction vessels 12.

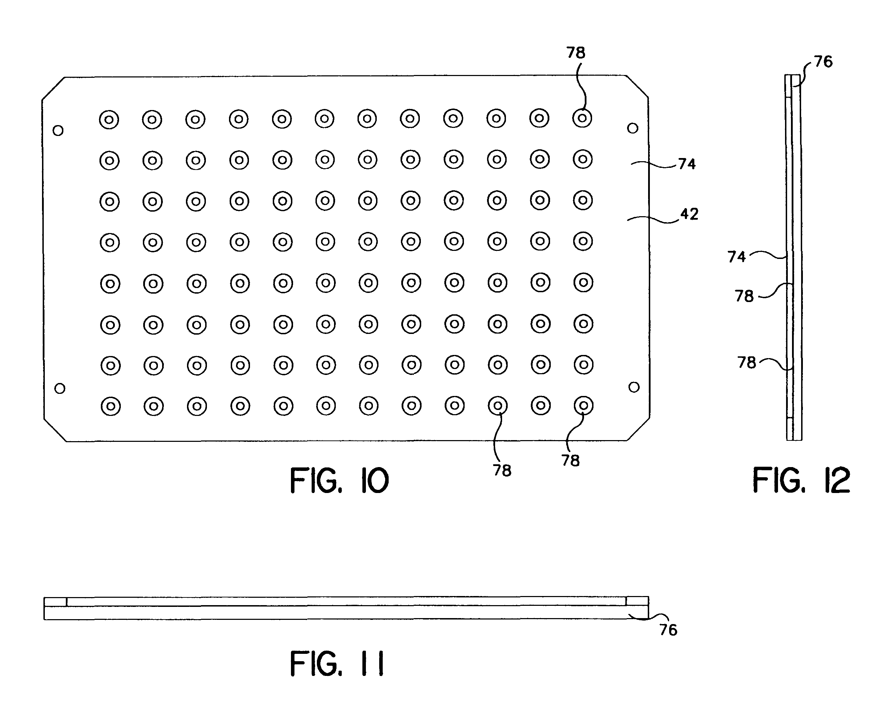

Referring now to Figures 10-12 where the capping assembly 43 is shown, it is seen that the capping assembly 43 includes a rigid metal plate 74 and a polymeric system sheet 76 of non-chemically reactive, elastic, polymeric material. The polymeric material 76 underlies an array of ninety-six holes 78 in the plate 74, which holes align with the open tops of the vials 12 in the assembly of Figure 1. The polymeric septum sheet provides a closure for the open top of each reaction vessel 12. When the needles 22 (Figure 1) are lowered with the washing manifold 20, the needles pass through the holes 78 and penetrate the polymeric septum sheet 76 so that fluid from the reservoirs 24 or 26 can be injected into the reaction vessels 12. When the needles 22 are withdrawn, the material of the polymeric septum sheet seals the open tops of the reaction vessels 12 so that vapors are contained within the reaction vessels when the reaction vessels are agitated by the vortexer 18.

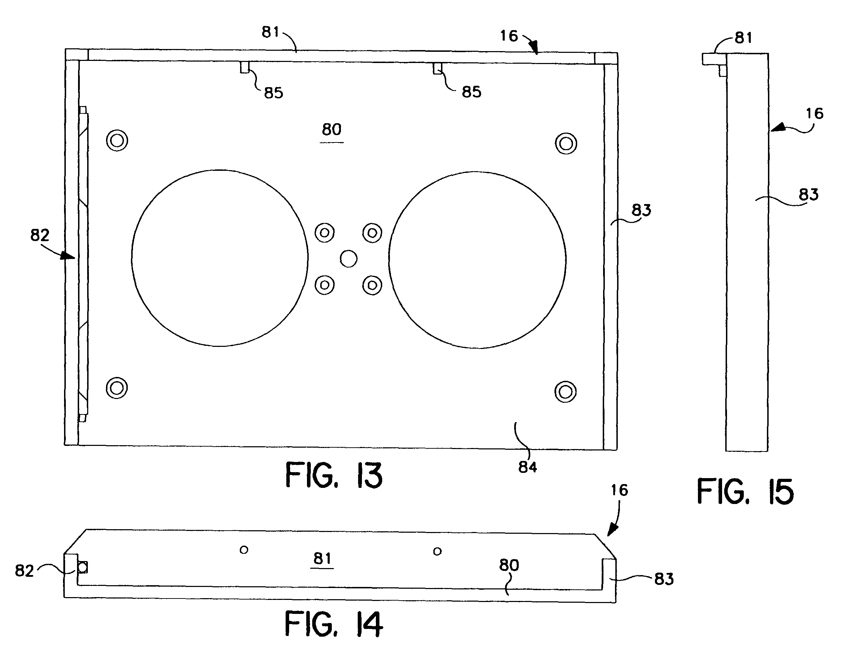

Referring now to Figures 13-15 where the vortexer 18 mounting plate 16 is shown, the vortexer mounting plate 16 is used to rigidly restrain the reaction grid assembly 14 (Figure 1) to the moving portion of the vortexer as the reaction grid assembly is agitated. The vortexer mounting plate 16 includes a base 80 with a back flange 81 and a pair of side flanges 82 and 83 which cooperate to hold the reaction grid assembly 14 (see Figures 1, 7-10) which is slid onto the base 80 from an open front 84 of the mounting plate 16.

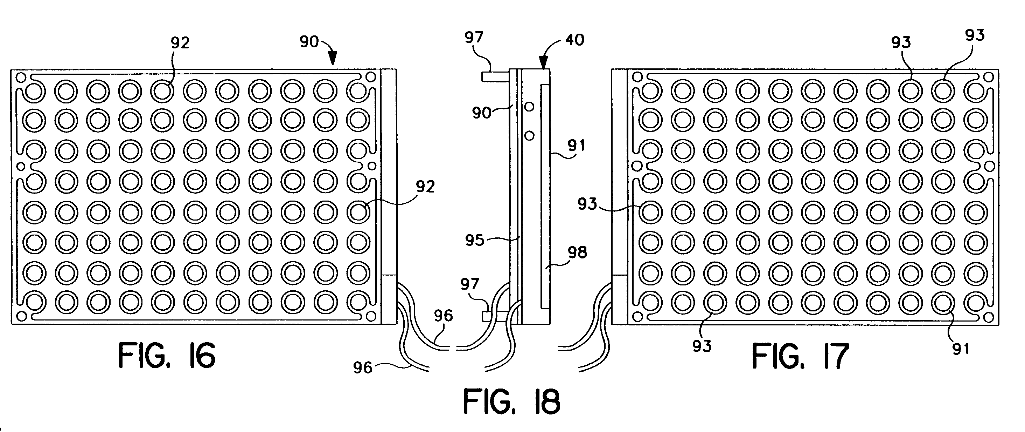

Referring now to Figures 16, 17 and 18, there is shown the thermal control system 40 (see Figure 1) which is used to either heat the contents of the reaction vessels 12 or to cool the contents. The thermal control system comprises a bottom plate 90 and a top plate 91, the bottom plate 90 having ninety-six apertures 92 therein which align with ninety-six apertures 93 in the top plate 91. A silicon heating pad 95 is sandwiched between the top heater block 91 and the bottom heater block 90 and is connected by leads 96 to a heater control 41 (see Figure 1) which maintains the desired heat level. Four spacers 97 project from the bottom block 91 to keep the heater assembly slightly spaced from the manifold plate 30 in order to raise the thermal block assembly 40 to the level of the fritt 12b in the reaction vessels 12. While the heating pad 95 is preferred, other heat approaches may be employed such as wrapping a heating plate, such as the plate 91, with wire to provide electric resistance heating or circulating heated fluid through channels in the plate.

If it is desired to cool, rather than heat the reaction, the top block 91 has an indentation 98 therein for containing a cooling material such as, for example, dry ice. In another approach, cooled ethylene glycol may be circulated through channels in the top block 91. It is emphasized that the reaction system 10 of Figure 1 need neither be heated or cooled if the reactions in the reaction vessels 12 are to occur at room temperature, or if temperature control is not critical, in which case, the thermal block system 40 need not be used.

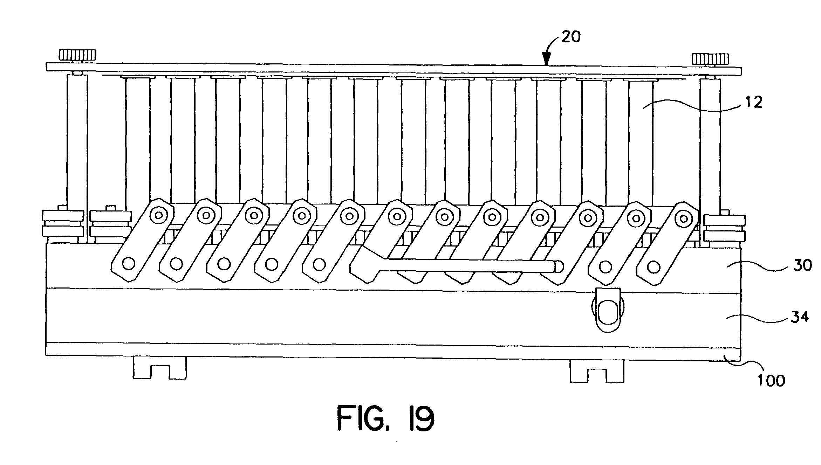

The reaction procedure is perhaps best understood in the context of Figures 19-22. In Figure 19, the reaction vessels 12 are assembled with the manifold valve block 30, the channel block 34 and capping plate assembly 20. This arrangement of parts is mounted on a robot deck mounting plate 100 for the loading phase of the procedure in which the reaction vessels 12 are loaded with fritts 12b and chemical linkers at a robotic loading site different from the site shown in Figure 1.

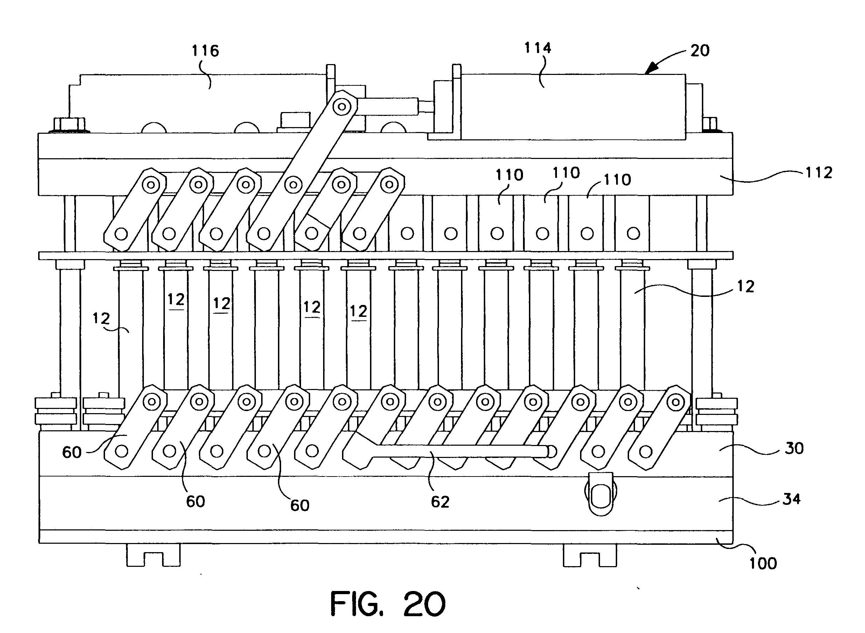

As is seen in Figure 20, the arrangement of Figure 19 is brought into contact with the fluid delivery system 21, which includes the needles 22 (Figure 1). In the fluid delivery system 21, a plurality of valves 110 in a manifold 112 are simultaneously opened by hydraulic cylinders 114 and 116 positioned on opposite sides of the manifold 112 to cause washing fluid or solvent from the container 24 (Figure 1) to flow into the ninety-six reaction vessels 12. While fluid is flowing into the reaction vessels 12, the ninety-six valve inserts 51 connected to each reaction vessel are held closed by the links 60 and operating handle 62 (also see Figures 4-6).

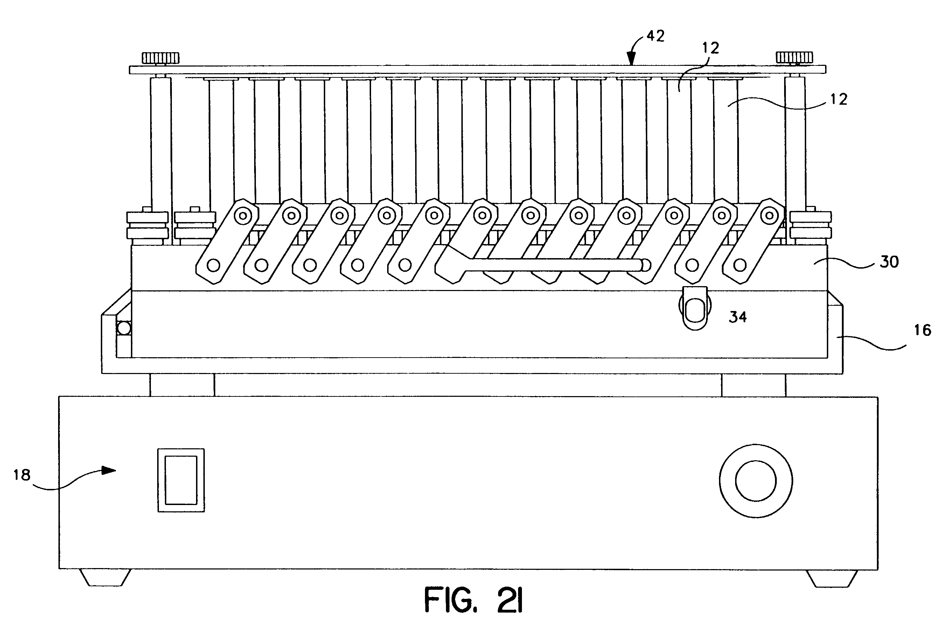

Referring now to Figure 21, after the reaction vessels 12 have been filled, the assembly of Figure 19 is disconnected from the washing manifold assembly 20 of Figure 20 and agitated by the vortexer 18.

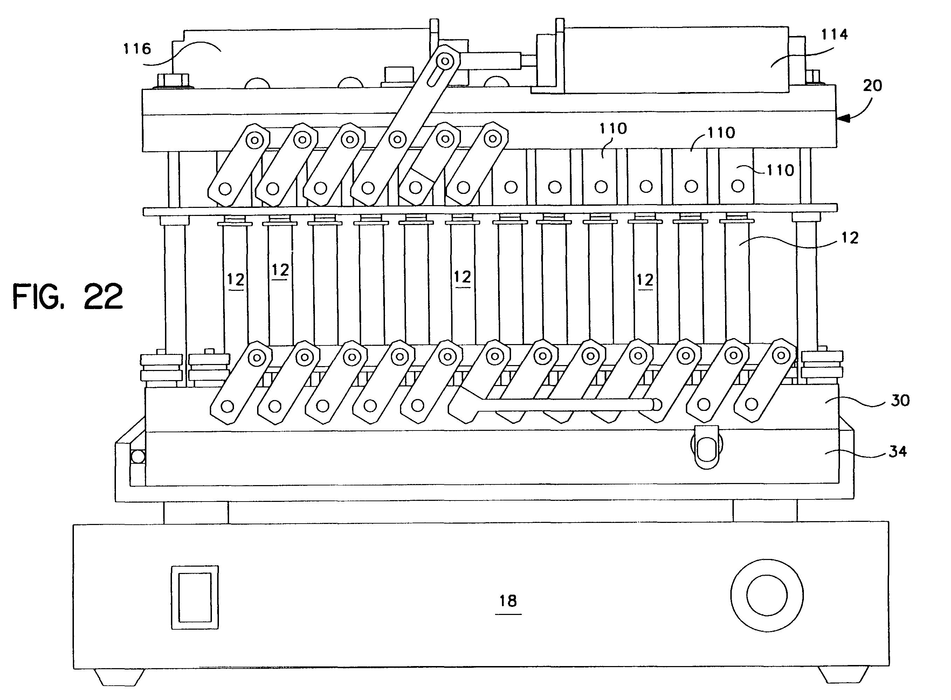

Referring now to Figure 22, after agitation by the vortexer 18 has stopped, the valves 51 in the manifold valve block 30 are opened and the liquid in the reaction vessels 12 is drawn through the filters 12a in the reaction vessels and into the channel block 34 by suction applied to line 36 (see Figures 7-9) by the vacuum pump 39 (see Figure 1). Depending on the chemical processing being performed, the washing and evacuating step may be performed once or repeated a number of times with various fluids.

The reaction phase of the method employing the system of the present invention is now complete with the sought after reaction products bonded to the fritts 12b in the ninety-six reaction vessels 12. it is now necessary to cleave the reaction products from the fritts 12b and to collect the reaction products in vials. This is accomplished by the components of the cleavage system set forth in the following description,

### The Cleavage System

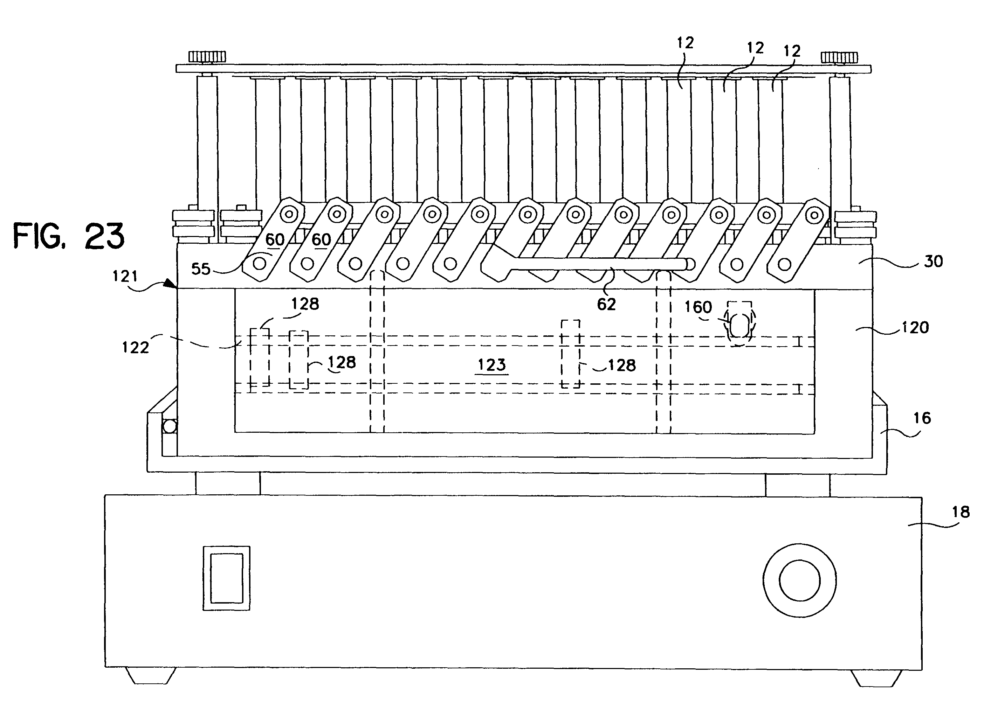

As is seen in Figure 23, after the washing step of Figure 22, the manifold valve block 30 is separated from the channel block 34 and mounted on a cleavage block 120 to form a cleavage assembly 121 in which a vial tray rack 122 (shown in dotted lines) is mounted in a cavity 123 of the cleavage block 120. The cleavage block 120 is in turn retained on the universal mounting plate 16 mounted on the vortexer 18. The vial rack 122 is loaded with ninety-six one dram vials 128 for receiving the reaction products from the reaction vessels 12 upon simultaneously opening the valves 51 in the manifold valve block 30 (see Figures 3-6).

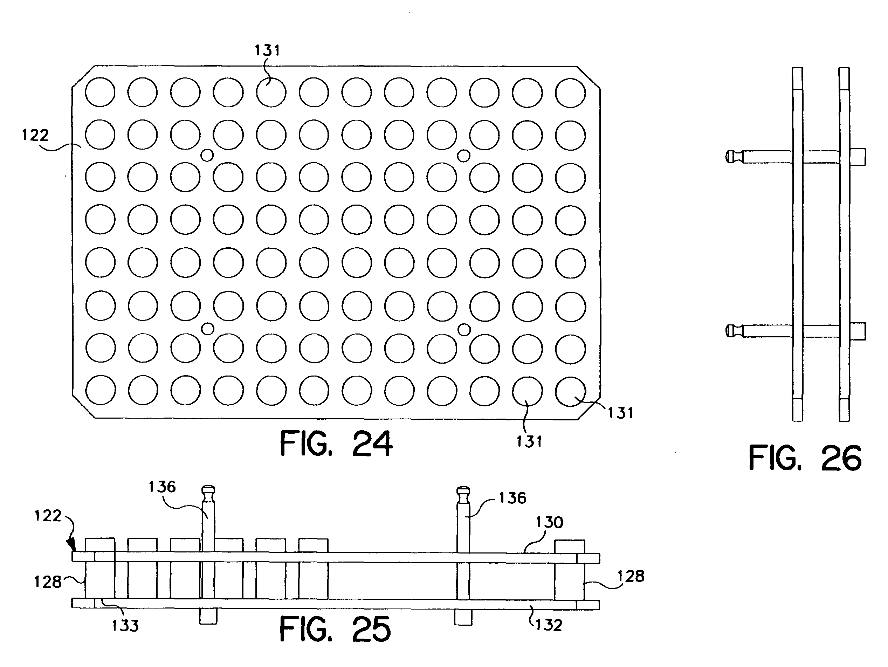

Referring now to Figures 24-26 where the vial rack 122 is shown removed from the cleavage block 120, it is seen that the vial tray has a top plate 130 with ninety-six holes 131 therethrough and a bottom plate 132 with ninety-six indentations 133 therein. The ninety-six vials 128 are mounted in the holes 131 with the bottoms of the vials resting in the indentations 133. Since it is necessary to have the vial rack 122 recessed within the cavity 123 so as to provide clearance for the male Luer connectors 53 of the valve inserts 51 (see Figure 3), lifting pins 136 are provided which facilitate removal of the valve rack 122 from the cavity.

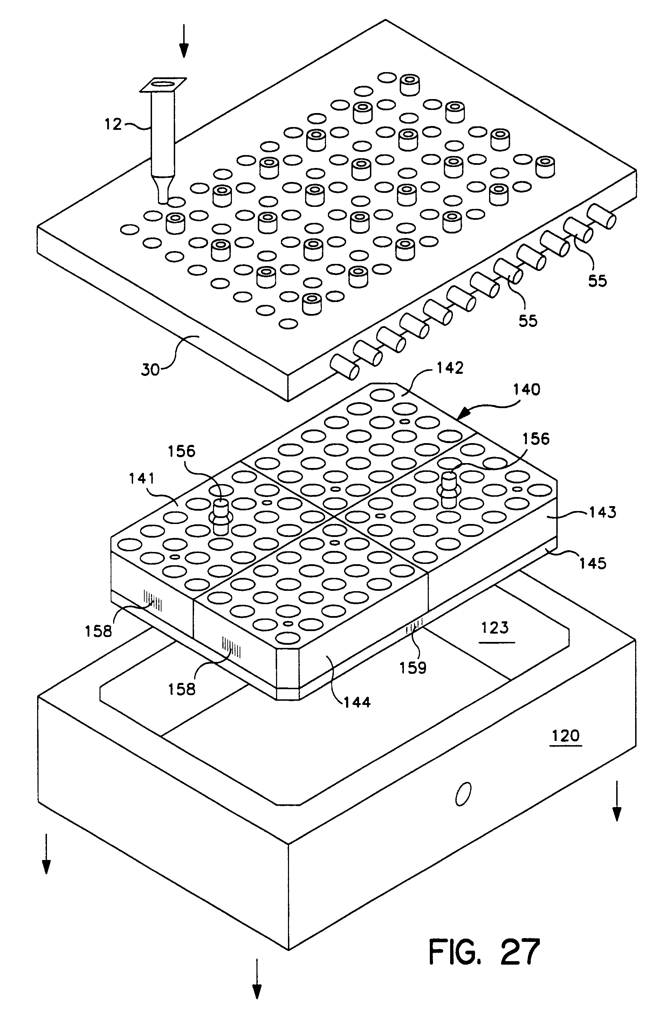

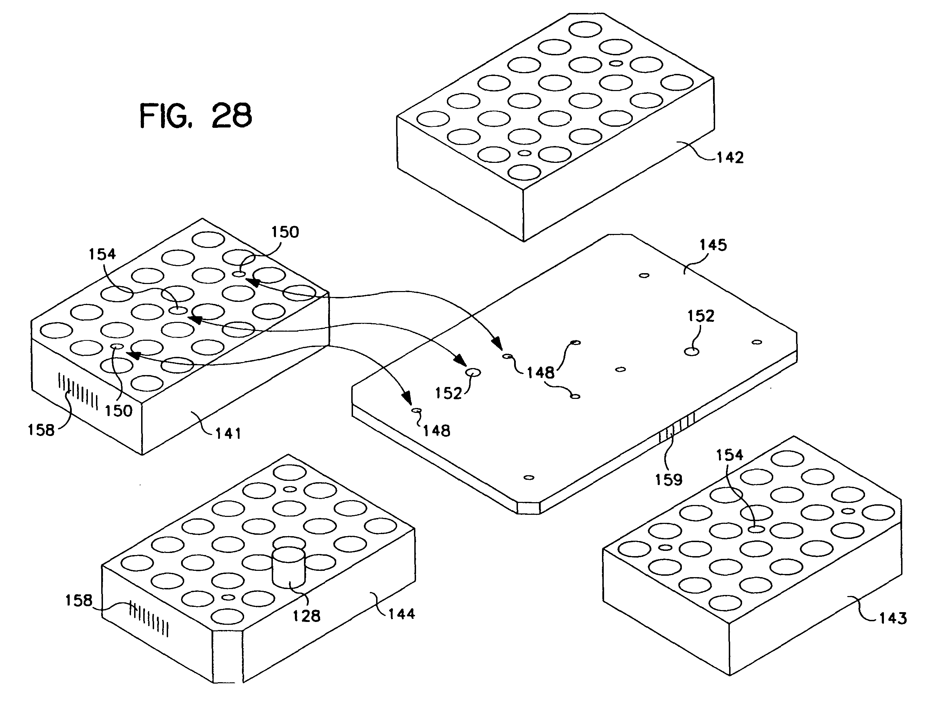

Referring now to Figures 27 and 28, where a second embodiment for supporting the vials 128 in the cleavage block 120 is shown, it is seen that the second embodiment is a composite vial tray 140 having four segments 141, 142, 143 and 144. The four segments 141-144 are mounted on a vial rack mounting tray 145. As is seen in Figure 28, the four vial mounting racks 141-144 are separable into racks that hold twenty-four one dram vials 128 each. The vial racks 141-144 each fit in a speed vac which spins four racks per cycle.

The rack mounting tray 145 includes an array of pin holes 148 which array is unique for each of the racks 141-144 so that the racks have a unique location to facilitate identifying the reaction products in the vials 128. Pin holes 148 receive pins through holes 150 in the separate vial racks 141-144 to accomplish the alignment. Larger holes 152 in the vial rack mounting tray 145 can receive projecting knobs 156 to facilitate pulling the entire vial rack assembly from the cavity 123 in the cleavage block 120.

In order to facilitate handling and identifying the reaction products in the vials 148, separate bar codes 158 are located on each of the vial racks 141-144 and a bar code 159 is on the rack mounting tray 145 to identify the batch of ninety-six vials 128 containing reaction products cleaved in one operation.

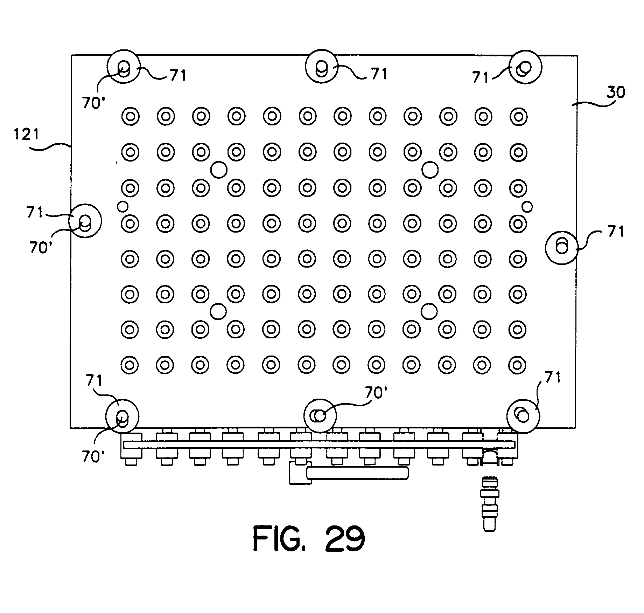

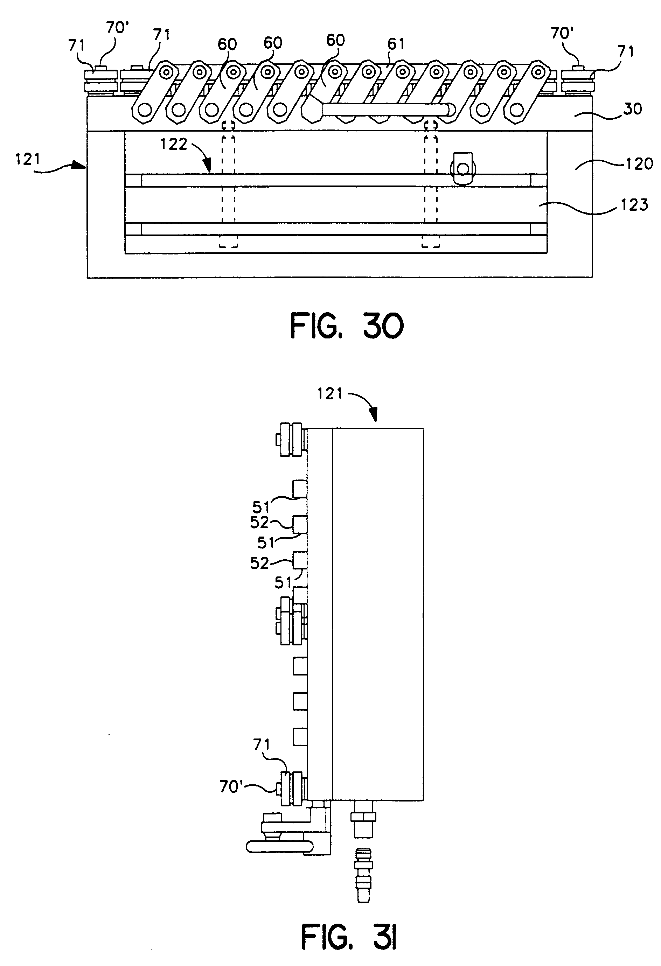

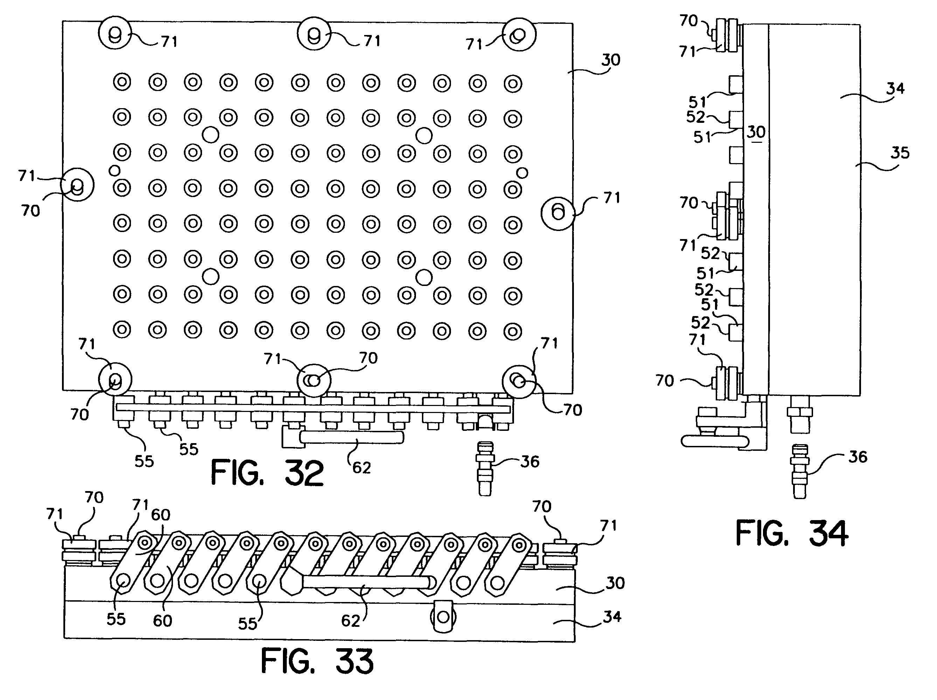

Referring now to Figures 29-31 and Figures 32-34, it is seen that the cleavage block 120 receives the vial rack 122 of Figures 24-26 or the composite vial rack 140 of Figures 27 and 28 (only the vial rack 122 is shown). As is seen in Figures 29-31, in the cleavage operation, it is the cleavage block 120 which is attached to the manifold valve block 30, rather than the channel block 34 being attached to the manifold valve block 30, as is the case in Figures 32-34. The substitution of the cleavage block 120 for the channel block 34, is rapidly and conveniently accomplished by removing the quick connect fasteners 71 (also see Figure 8). From comparing Figures 29-31 to Figures 32-34, it is readily apparent that changing from the reaction phase to the cleavage phase is rapidly accomplished by simply substituting the cleavage block 120 for the channel block 34 by loosening and fastening the quick connect fasteners 71.

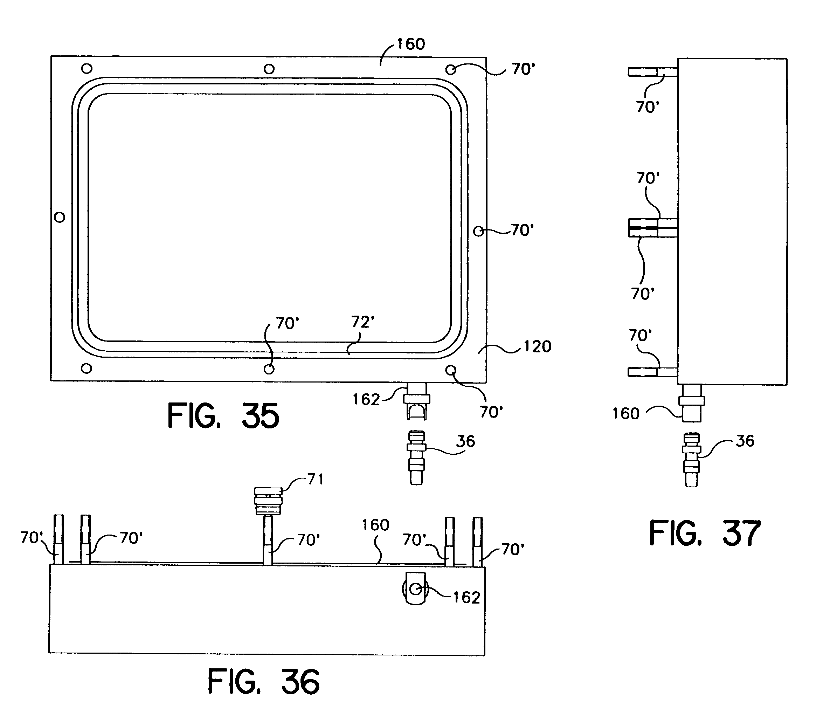

Further in this regard and referring to Figures 35-37, it is seen that the cleavage block 120 has a top structure which provides a coupling face 160 which is substantially identical to the top structure which provides the coupling face 69 of the channel block 34 shown in Figures 7-9 in that it has identically spaced attached attachment pins 70', as well as an identically placed gasket 72'. The coupling block 120 is, therefore, as stated, rapidly interchangeable with the channel block 34. Accordingly, it is readily apparent that the interface between the manifold valve block 30 and the channel block 34 is substantially identical to the interface between the manifold valve plate and the cleavage block 120. The channel block 120 also includes a quick connect fitting 160 for attachment to vacuum line 36 (see Figure 1).

Referring again to the assembly of Figure 23, after the reagent vessels 112 have been agitated by the vortexer 18, the ninety-six valves 51 in the valve manifold 30 are opened simultaneously by operating the handle 62 which rotates the linkages 60 to rotate the valve stems 55. With the opening of the insert valves 51, a vacuum is applied to the quick connect fitting 160 by the vacuum pump 39 which causes the solvent in the reaction vessels 12 which has cleaved the reaction products from the fritts 12b in the reaction vessels to flow with those reaction products into the array of ninety-six vials 128. The vials 128 are then removed from the cavity 123 in the cleavage block 120 and processed to separate the reaction products from the solvent.

### Subcomponents and Systems

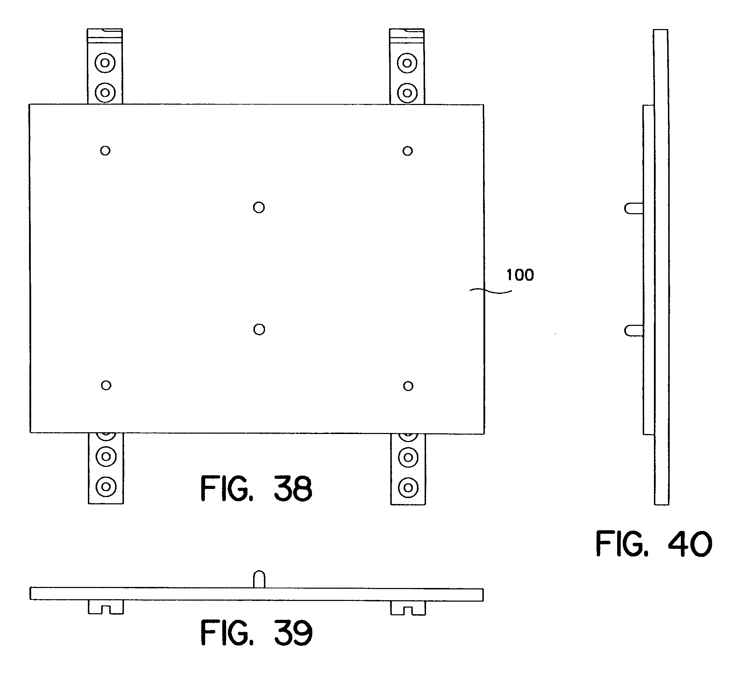

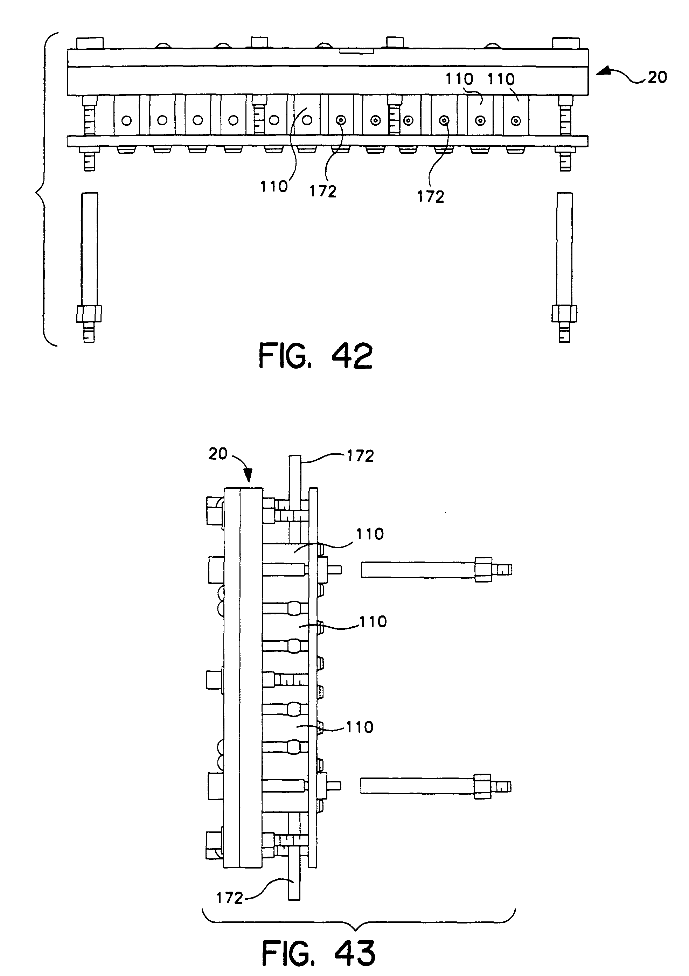

Figures 38-45 are directed to subcomponents and system which facilitate the operation of the aforedescribed reaction grid system and cleavage system.

Figures 38-40 are views of the robot deck mounting plate 100 shown in Figures 19 and 20 which is used to mount the reaction grid assembly 14 on a robotic machine which loads chemical agents in the reaction vessels 12 prior to mounting the reaction grid assembly on the vortexer 18 shown in the reaction station system 10 of Figure 1.

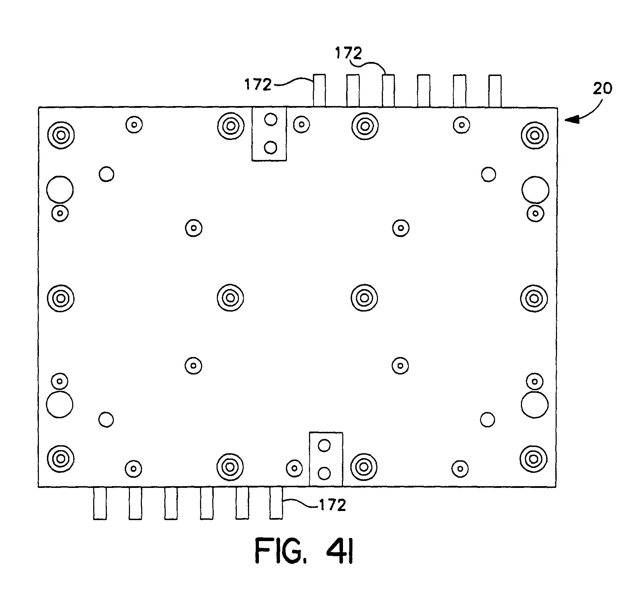

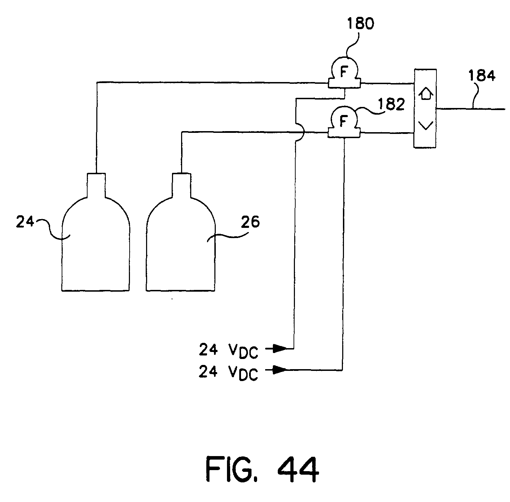

Referring now to Figures 41-43 where the fluid dispensing manifold 20 is shown in greater detail, it is seen that the washing manifold 20 includes a plurality of the valves 110 operated by valve stems 172 positioned on opposite sides of the manifold 20 to release simultaneously fluids for the fluid treatment steps of Figures 20 and 22, upon activating the hydraulic cylinders 114 and 116 shown in Figures 20, 22 and 46 to release the washing and reaction fluids in containers 24 and 26 of Figures 1 and 44.

Referring now to Figure 44, there is shown a washing fluid bottle 26 and a solvent bottle 24 (also see Figure 1 ) which are connected by valves 180 and 182 for selective dispensing of these liquids through a line 184 to the washing manifold 20 of Figures 1, 20, 22 and 41-43.

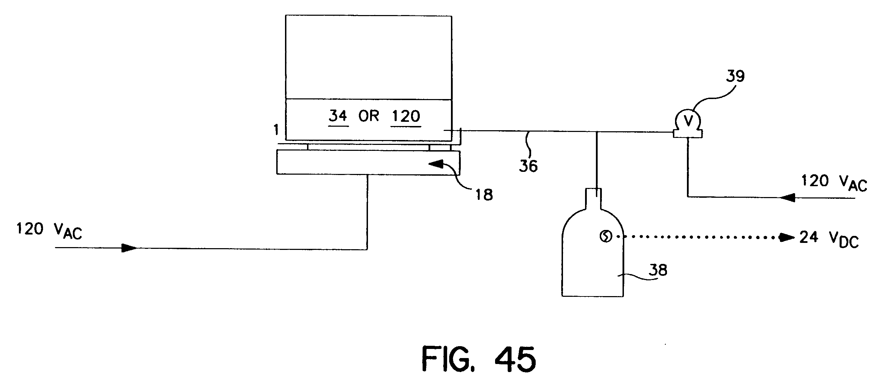

Referring now to Figure 45, there is shown the vacuum system for applying a vacuum to either the channel block 34 or cleavage block 120 via vacuum line 36 with waste washing fluid from the channel block 34 being accumulated in a waste container 38,

The resulting fluid dispensing apparatus, systems and methods resulting from combining the features of Figures 1, 20, 22, 44 and 46 enables rapid, simultaneous washing and treating of the contents in the ninety-six reaction vessels 12 while the evacuating system of Figure 45 cooperates with both the channel block 34 and the cleavage block 120 to remove the fluids from the reaction vessels 12 to the waste container 38 or the vials 128, respectively.

By utilizing the manifold valve block 30 to retain and release various washing fluids and the reaction products within and from the reaction vessels 12, as well as the selected fluid collection arrangement provided by channel block 34 and cleavage block 120, the convenience, speed and efficiency of simultaneously generating new compounds is further facilitated by employing the fluid handling system of Figures 1, 20, 22 and 41-46 therewith.

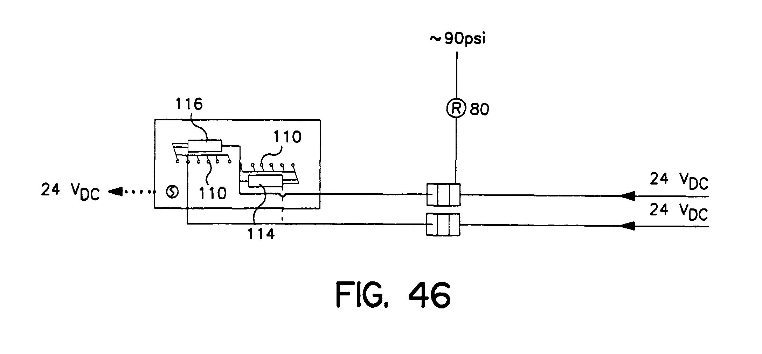

Referring now to Figure 46, there is shown a valve actuating system for gang actuating the valves of the washing manifold 112 shown in Figures 20, 22 and 41-43, wherein pneumatic cylinders 114 and 116 open valves 110.

### EXAMPLE

### Example 1 - Solid Phase Chemical Synthesis (General)

The reaction grid is used to perform multiple solid phase chemical synthesis of organic molecules in a matrix format. The reaction vessels 12 are filled with solid support resins and chemical templates are attached thereto via appropriate linkers. Subsequently, chemicals are added to the reaction vessels through the top of the syringe barrel, thereby permitting chemical transformations and reactions to occur on the templates attached to the solid support beads. The sealed reaction grid and filters used in the reaction vessels 12 prevents chemical reagents from leaking out of the reaction vessels during the reaction cycles.

After a desired chemical transformation has been performed, the beads are rinsed free of excess chemicals in a wash cycle by the application of vacuum to the block. The vacuum source is connected to the block through the outlet port. This allows liquid waste to drain from each of the reaction vessels through the inlet holes into the drainage channel and then to the main channel and finally into a waste trap. Subsequently, the beads are then washed repeatedly with wash solvent and again the waste removed by suction via the outlet connection port connected to the vacuum source.

Following completion of the transformations in each of the reaction vessels 12 and the washing and rinsing of the solid support resin, the manifold valve plate or block 30 is removed from the channel block 34. Thereafter, the manifold valve plate or block 30 is connected to a second block which is the cleavage block 120. In this assembly, the cleavage block 120 has individual receptacles or vials 128 corresponding to the number of reaction vessels/inlet ports in the array in the top section. Thus, in an 8x12 matrix design, there are ninety-six individual vials 128 or test tubes positioned within the cleavage block 120.

In comparing the cleavage block 120 to the channel block 34 of the reaction grid, the cleavage block is a hollow block containing individual receptacles or vials 128 for the chemical products either in a tray or as a molded microtiter plate. The top section of the cleavage block 120 is the same as the top section of the channel block 34. In the cleavage block, the top sections and bottom sections are sealed to one another using an O-ring positioned therebetween just as in the reaction grid assembly 14. The male Luer connectors 53 of the valve inserts 51 (see Figure 3A) function as spouts to the cleavage block 120, draining into individual chambers (vials 128) rather than into connected channels 65 as in the case of the channel block 34.

### Example 2 - Solid Phase Chemical Synthesis (Specific Example)

The following is a solid phase synthesis procedure for the synthesis of a library of 96 quinazoline analogs. These analogs are synthesized in an 8x12 matrix starting from a common anthranilic acid precursor. Treatment with 12 unique isocyanates and 8 unique alkylating agents provides 96 unique compounds.

### Solid Phase Organic Synthesis of 1,3-Dialkyl-2,4-Quinazoline Diones

### Example of Solid Phase Synthesis of Quinazoline

### Analogs Using the Reaction Grid Assembly

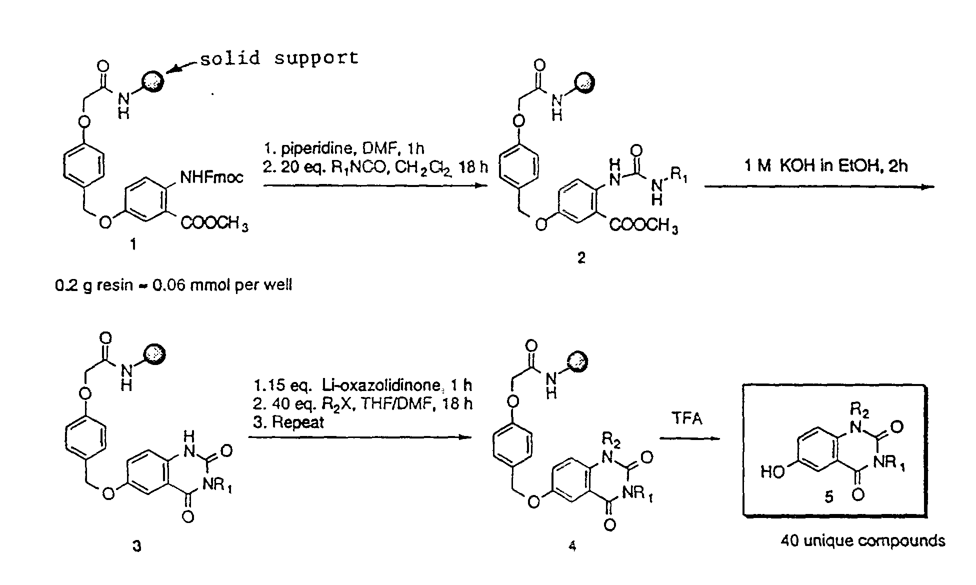

Polymer (Tentagel-S NH₂) supported anthranilic acid derivative 1 is slurried in dimethyl formamide (DMF) and transferred to 96 individual reaction vessels 12 in an 8x12 matrix format (0.20 g, 0.06 mmol per vessel in 2 mL DMF). Piperidine (0.5 mL) is added to each vessel and the vessels are shaken for 1 h. The reaction grid assembly 14 is connected to a vacuum source via line 36 and the reaction solution is filtered away. DMF (2 mL) is added to each vessel 12 by using the washing system 21 of Figures 1, 20, 22, 41-44 and 46, and the vessels are shaken for 5 min., then drained via vacuum as described above using the drainage system of Figure 45. This rinsing step 35 is repeated three times. Methylene chloride (2 mL) is added to each vessel 12 and the vessels are shaken for 5 min., then drained via vacuum as described above. This rinsing step is repeated three times again using the washing system 21 and the drainage system 35 provided by the manifold.

Methylene chloride (2 mL) is added to each vessel 12 and individual isocyanates (R₁) are then added to each vessel (8 different reagents, 1.16 mmol, 20 equivalents). The reaction grid assembly 14 is shaken for 18 hours to carry out the chemical transformation. Then the agitation is stopped, the vacuum port 68 of the reaction grid assembly 14 is connected to a vacuum source and the reaction solution filtered. Methylene chloride (2 mL) is added to each vessel 12 using the fluid handling manifold 20. The reaction grid assembly 14 is shaken for 5 min, and then drained via vacuum as described above using the drainage system 35. This rinsing step is repeated three times. Ethanol (2 mL) is added to each vessel 12 and the assembly 14 is shaken for 5 min., then drained via vacuum as described above. This rinsing step is repeated three times using the washing and drainage system 27 and 35. This operation now provides 8 unique urea derivatives 2.

1M Potassium hydroxide in ethanol (2 mL) is added to each vessel 12 and the assembly 10 shaken for 1 hour. The assembly 14 is connected to vacuum and the reaction solution is filtered away. Ethanol (2 mL) is added to each vessel 12 and the reaction grid assembly 14 is shaken for 5 min., then drained via vacuum as described above. This rinsing step is repeated three times using the washing and drainage systems 27 and 35, respectively. Tetrahydrofuran (2 mL) is added to each vessel 12 and the reaction grid assembly 10 is shaken for 5 min., then drained via vacuum as described above. This rinsing step is repeated three times. This operation now provides 8 unique monoalkylquinazolines 3.

Tetrahydrofuran (1 mL) is added to each vessel 12 followed by lithium benzyloxazolidinone (3 mL), 0.3 M in tetrahydrofuran, 0.90 mmol, 15.5 equivalents). The vessels are shaken for 1.5 hours. A different alkylating reagent (R₂) is now added down each of the 12 columns of the 8x12 grid. (12 different alkylating reagents, 2.32 mmol, 96 equivalents). DMF (1 mL) is added to each vessel 12 and the vessels are shaken for 18 hours then the reaction grid assembly 14 is connected to vacuum via port 68 and the reaction solution is filtered away. The addition of lithium benzyloxazolidinone and alkylation agents is then repeated as described above. Tetrahydrofuran (2 mL) is added to each vessel 12 and the vessels are shaken for 5 min., then drained via vacuum as described above. This rinsing step is repeated three times. 50% Tetrahydrofuran in water (2 mL) is added to each vessel and the vessels are shaken for 5 min., then drained via vacuum as described above. This rinsing step is repeated three times. Tetrahydrofuran (2 mL) is added to each vessel 12 and the vessels are shaken for 5 min., then drained via vacuum as described above. This rinsing step is repeated three times. This operation now provides 96 unique dialkyl quinazolines 4, one in each reaction vessel 12, attached to the solid support.

The manifold valve block 30 with the attached reaction vessels 12 is separated from the channel block 34 and attached to cleavage block 120 to form the cleavage block assembly. A vial rack 122 or 140 is positioned within chamber 123 of cleavage block 120. 95% Trifluoroacetic acid in water (2 mL) is added to each vessel 12 using the fluid handling system 21 and the reaction vessels 12 are shaken for 3 hours. A vacuum source 38 is attached to vacuum port 160 of the cleavage block and the vessels 12 are filtered into 96 separate vessels, diluted with water and lyophilized to provide 96 unique dialkyl quinazolines 5.

Throughout this example, the washing and drainage systems 27 and 35, respectively, the reaction grid assembly 14 and the vortexer 18 are utilized to form the reaction products in the reaction vessels 12.

The preceding examples can be repeated with similar success by substituting the generically or specifically described reactants and/or operating conditions of this invention for those used in the preceding examples.

From the foregoing description, one skilled in the art can easily ascertain the essential characteristics of this invention, and without departing from the scope thereof, can make various changes and modifications of the invention to adapt it to various usages and conditions.

## Claims

1. A reaction grid system for use in performing multiple separate reactions, said grid comprising:
a vessel retaining member with a plurality of openings (50) therethrough, each opening having an inlet (48) and an outlet (49) connected through a valve (51);
a plurality of reaction vessels (12) for mounting individually in the inlets (48) of the openings (50);
a drainage member (35) associated with the vessel retaining member, the drainage member having a drainage field therein aligned with the outlets (49) of the openings (50); and
at least one valve operator (32) in the form of a rod (55) for operating at last several of the valves (51) simultaneously upon moving the rod (55) to open the valves (51) to drain fluids from the reaction vessels (12) into the drainage member,
wherein the vessel retaining member is a block of material and the openings (50) are first passages (50) through the material.

2. The reaction grid system according to claim 1, wherein said plurality of inlets (48) are arranged in an array of at least two columns and at least two rows and a number of channels (65) within said drainage member (35) is equal to the number of rows in said array, wherein each inlet (48) in a given row of said array communicates with a single channel (65), each of said cannels (65) in the drainage member preferably being in fluid communication with a main channel, wherein said main channel provides fluid communication between each of said channels (65) and at least one outlet port (66).

3. The reaction grid system of claim 1, wherein the valve operator (32) includes valve portions in a rod (55), the valve portions being spaced openings (56) in the rods (55) which when aligned with the inlets (48) and outlets (49) allow fluid to pass therethrough and, when misaligned, block passage of fluid therethrough, the rod (55) preferably being rotated to align and misalign the openings with the passages (50), preferably the valves (51) being formed by inserts in each of the first passages (50), the inserts each having radially extending precision bores (54) formed therein for receiving the precisely formed valve portions of the rods (55) and having axially extending bores for providing fluid flow through the inserts (48), the fluid flow being controlled by the valve portions of the rods (55).

4. The reaction grid system according to claim 1, wherein the reaction grid further includes a capping assembly (43) associated therewith for simultaneously closing each vessel (12) with a closure portion, which closure portion is configured to admit fluid when penetrated, preferably being an elastomeric material (76) providing an opening (78) therethrough when penetrated by a probe.

5. The reaction grid system according to one of claims 1 to 4, further including a coupling face on the vessel retaining member and a complimentary coupling face (69) on the drainage member (35) for detachably securing the drainage member to the vessel retaining member, and/or a cleavage assembly (121) having a coupling face attachable to the coupling face of the vessel retaining member, the cleavage assembly (121) including a plurality of reaction product collection vials (128) aligned with the outlets (49) of the vessel retaining member when the drainage member (35) is detached from the vessel retaining member and the cleavage assemby (121) is attached to the vessel retaining member, and/or a solvent delivery system comprising an array of probes corresponding to the array of closures in the capping assembly (43), wherein a probe is aligned with each closure for selectively penetrating that closure to deliver liquid simultaneously to each reaction vessel (12), and/or a vaccum system (39) connectable to the drainage member (35) for applying a vacuum thereto for evacuating fluids therefrom and for applying a vacuum to the cleavage assembly (121) to cause reaction products in the reaction vessels (12) to drain to the collection vials (128), and/or a thermal control arrangement juxtaposed with the reaction vessels for heating or cooling the contents of the vessels.

6. The reaction grid system according to claim 1, wherein said vessel retaining member is:
a manifold block (30) of resinous material having an upper surface (45), a lower surface (46) and side surfaces (47);
the array of first passages (50) through the block (30) from the inlets (48) at the upper surface (45) to the outlets (49) at the lower surface (46);
an array of second transverse passages (57) extending through the block (30), each second transverse passage (57) intersecting a plurality of first passages (50), whereby the inlets (48) of the first passages (50) each receive one of the reaction vessels (12) and the second passages (57) provide access to pluralities of first passages (50) for controlling flow of fluid from the reaction vessels (12) out through the outlets (49) in lower surface of the block (30), the valve operators (32) extending through the second passages.

7. The reaction grid system of claim 6 further comprising:
a drainage block (34) attached to the manifold block (30), the drainage block (34) having at least one cavity (123) therein for receiving fluid from the reaction vessels (12) when fluid in the reaction vessels (12) flows from the outlets (49) in the manifold block (30), drainage block (34) preferably having interconnected channels (65) therein aligned with the outlets (49) of the manifold block (30).

8. The reaction grid system of claim 7, further comprising:
a vial retaining member (122) for coupling to the lower surface of the manifold block and for holding a plurality of vials (128) in alignment with the outlets (49) of the manifold block (30), the vial retaining member (122) preferably being a cleavage block (120) having a cavity (123) therein in which the vials (128) are received.

9. The reaction grid system of one of claims 6 to 8 further comprising:
a thermal block (40) held spaced from the manifold block (30) for surrounding the reaction vessels (12) when the reaction vessels (12) are mounted in the inlets (48) of the manifold block (30) for controlling the temperature of contents within the reaction vessels.

10. The reaction grid system of one of claims 6 to 9 further comprising:
a capping assembly (43) attached to the manifold block (30) in spaced relation thereto, the capping assembly (43) sealing inlets of the reaction vessels (12) when the reaction vessels (12) are mounted in the inlets (48) of the manifold block (30), preferably a valve insert in each of the first passages (50).

11. The reaction grid system of one of claims 8 to 10 further comprising:
an agitation device, preferably a vortexer (48) for agitating the contents of the reaction vessels (12) prior to transferring the contents to the collection vials (128), preferably including a mounting plate (16) for supporting either the drainage block (34) or the cleavage block (121) on the agitator.

12. A vial retaining block assembly in combination with the reaction grid system of claim 1 for containing a plurality of vials (128) arranged in an array for receiving reaction products from an array of reaction vessels (12), the vial retaining block assembly (121) comprising:
a block (120) having a cavity (123) therein and a coupling face, the coupling face including a seal and fastening means;
a vial rack (122) disposed in the cavity (123), the vial rack (122) including an array of holes (131) for supporting the vials (128); and
a port in the block (120) in communication with the cavity (123), whereby when a vacuum is applied to the port, a partial vacuum occurs in the cavity (123) to facilitate flow of the reaction products from the reaction vessels (12) to the vials (148).

13. The assembly of claim 12, wherein the vial rack (122) includes at least one gripping member extending therefrom for facilitating withdrawing the rack (122) from the cavity (123) in the block (120).

14. The assembly of claim 12, wherein the vial rack (122) is comprised of an upper plate (130) with the arrangement of holes (131) therein and a lower plate (132) spaced from the upper plate (130), the lower plate (132) having an array of depressions (133) therein aligned with the holes (131) for seating the bottoms of the vials (148).

15. The assembly of claim 12, wherein the vial rack (140) is a composite rack (140) having more than one vial retaining section (141 - 144), the vial retaining sections (141- 144) being separable from one another when out of the cavity (123), each vial retaining section (141 - 144) preferably having a separate code (158) marked thereon, further including a support (145) for the vial retaining sections (141 - 144), the support (145) having a code (159) specific thereto marked thereon, the codes preferably being bar codes.

16. The assembly of claim 15, wherein the vial retaining sections have location specific couplings thereon which cooperate with location specific couplings on the support (145) wherein each vial retaining section (141 - 144) has a unique position on the support (145), the location specific couplings preferably being arrays of pins on and holes (148) in the support (145) and vial retaining sections (141- 144) which align only when the sections are properly positioned with respect to the support (145).

17. A reaction grid system for use in performing multiple separate reactions, said grid comprising:
a vessel retaining member (30) in the form of a block of material with a plurality of first passages (50) therethrough, each opening having an inlet (48) and an outlet (49) connected through a valve (51);
an array of reaction vessels (12) for mounting individually in the inlets (48) of the openings (50);
a drainage member (35) associated with the vessel retaining member, the drainage member having a drainage field therein aligned with the outlets (49) of the openings (50); and;
at least one valve operator (32) in the form of a rod for operating at least several of the valves (51) simultaneously to open the valves to drain fluids from the array of reaction vessels (12) into the drainage member (35),
a coupling face on the vessel retaining member (30) and a complementary coupling face (69) on the drainage member (35) for detachably securing the drainage member to the vessel retaining member;
a cleavage assembly (121) having a coupling face attachable to the coupling face of the vessel retaining member, the cleavage assembly (121) including a plurality of reaction product collection vials (128) aligned with the outlets (49) of the vessel retaining member when the drainage member (35) is detached from the vessel retaining member and the cleavage assembly (121) is attached to the vessel retaining member;
a solvent delivery system comprising an array of probes corresponding to the array of reaction vessels wherein a probe is aligned with each reaction vessel for selectively delivering liquid simultaneously to each reaction vessel (12) and
a vacuum system (39) connectable to the drainage member (35) for applying a vacuum thereto for evacuating fluids therefrom and for applying a vacuum to the cleavage assembly (121) to cause reaction products in the reaction vessels (12) to drain to the collection vials (128).

18. The reaction grid system of claim 17 futher including a thermal control arrangement (40) juxtaposed with the reaction vessels for heating or cooling the contents of the vessels.

19. The reaction grid system of one of claims 17 and 18 further including a capping assembly (43) attached to the manifold block (30) in spaced relation thereto, the capping assemnbly (43) sealing inlets of the reaction vessels (12) when the reaction vessels (12) are mounted in the inlets (48) of the manifold block (30), preferably a valve insert in each of the first passages (50).

20. The reaction grid system of one of claims 17 to 19 further including an agitation device, preferably a vortexer (18) for agitating the contents of the reaction vessels (12) prior to transferring the contents to the collection vials (128), preferably including a mounting plate (16) for supporting either the drainage block (34) or the cleavage block (121) on the agitator.

21. A vial retaining block assembly in combination with the reaction grid system of claim 17 for containing a plurality of vials (128) arranged in an array for receiving reaction products from an array of reaction vessels (12), the vial retaining block assembly (121) comprising:
a block (120) having a cavity (123) therein and a coupling face, the coupling face including a seal and fastening means;
a vial rack (122) disposed in the cavity (123), the vial rack (122) including an array of holes (131) for supporting the vials (128); and
a port in the block (120) in communication with the cavity (123), whereby when a vacuum is applied to the part, a partial vacuum occurs in the cavity (123) to facilitate flow of the reaction products from the reaction vessels (12) to the vials (148).

22. The assembly of claim 21, wherein the vial rack (122) includes at least one gripping member extending therefrom for facilitating withdrawing the rack (122) from the cavity (123) in the block (120).

23. The assembly of claim 21, wherein the vial rack (122) is comprised of an upper plate (130) with the arrangement of holes (131) therein and a lower plate (132) spaced from the upper plate (130), the lower plate (132) having an array of depressions (133) therein aligned with the holes (131) for seating the bottoms of the vials (148).

24. The assembly of claim 21, wherein the vial rack (122) is a composite rack (140) having more than one vial retaining section (141-144), the vial retaining sections (141-144) being separable from one another when out of the cavity (123), each vial retaining section (141 - 144) preferably having a separate code (158) marked thereon, further including a support (145) for the vial retaining sections (141 - 144), the support (145) having a code (159) specific thereto marked thereon, the codes preferably being bar codes.

25. The assembly of claim 24, wherein the vial retaining sections have location specific couplings thereon which cooperate with location specific couplings on the support (145) wherein each vial retaining section (141 - 144) has a unique position on the support (145), the location specific couplings preferably being arrays of pins on and holes (148) in the support (145) and vial retaining sections (141 -144) which align only when the sections are properly positioned with respect to the support (145).

## Patentansprüche

1. Reaktionsgittersystem zum Benutzen bei dem Ausführen von mehrfachen getrennten Reaktionen, wobei das Gitter aufweist:
ein Gefäßerhalteteil mit einer Mehrzahl von Öffnungen (50) dadurch, wobei jede Öffnung einen Einlaß (48) und einen Auslaß (49) aufweist, die durch ein Ventil (51) verbunden sind;
eine Mehrzahl von Reaktionsgefäßen (12) zum individuellen Anbringen in den Einlässen (48) der Öffnungen (50);
einem Abflußteil (35), das mit dem Gefäßerhalteteil verknüpft ist, wobei das Abflußteil ein Abflußfeld darin aufweist, das mit den Auslässen (49) der Öffnungen (59) ausgerichtet ist; und
mindestens ein Ventilbetätigungsorgan (32) in der Form einer Stange (55) zum gleichzeitigen Betätigen mindestens mehrerer der Ventile (51) auf Bewegen der Stange (55) hin zum Öffnen der Ventile (51) zum Ablassen von Fluiden aus den Reaktionsgefäßen (12) in das Abflußteil;
wobei das Gefäßerhalteteil ein Block aus Material ist und die Öffnungen (50) erste Durchgänge durch das Material sind.

2. Reaktionsgittersystem nach Anspruch 1, bei dem die Mehrzahl von Einlässen (48) in einem Feld von mindestens zwei Spalten und mindestens zwei Reihen angeordnet ist und eine Zahl von Kanälen (65) innerhalb des Flußteiles (35) gleich der Zahl von Reihen in dem Feld ist, bei dem jeder Einlaß (48) in einer gegebenen Reihe des Feldes mit einem einzelnen Kanal (65) in Verbindung steht, wobei jeder der Kanäle (65) in dem Abflußteil bevorzugt in Fluidverbindung mit einem Hauptkanal steht, worin der Hauptkanal eine Fluidverbindung zwischen jedem der Kanäle (65) und mindestens einer Auslaßöffnung (66) vorsieht.

3. Reaktionsgittersystem nach Anspruch 1, bei dem das Ventilbetätigungsorgan (32) Ventilabschnitte in einer Stange (55) enthält, wobei die Ventilabschnitte beabstandete Öffnungen (56) in der Stange (55) sind, die, wenn sie mit den Einlässen (48) und den Auslässen (49) ausgerichtet sind, Fluid ermöglichen, dadurch zu gehen, und wenn sie nicht in Ausrichtung sind, den Durchgang von Fluid dadurch blockieren, wobei die Stange (55) bevorzugt gedreht wird zum Ausrichten und Nichtausrichten der Öffnungen mit den Durchgängen (50), bevorzugt die Ventile (51) durch Einsätze in jedem der Durchgänge (50) gebildet sind, die Einsätze jeweils sich radial erstreckender Präzisionsbohrungen (54) aufweisen, die darin gebildet sind zum Aufnehmen der präzise gebildeten Ventilabschnitte der Stangen (55), und sich axial erstreckende Bohrungen zum Vorsehen eines Fluidflusses durch die Einsätze (48) aufweisen, wobei der Fluidfluß durch die Ventilabschnitte der Stangen (55) gesteuert wird.

4. Reaktionsgittersystem nach Anspruch 1, bei dem das Reaktionsgitter weiter eine Kappenanordnung (43) aufweist, die damit zum gleichzeitigen Schließen eines jeden Gefäßes (12) mit einem Verschlußabschnitt verknüpft ist, wobei der Verschlußabschnitt so ausgelegt ist, daß er Fluid zuläßt, wenn er durchdrungen ist, wobei er bevorzugt aus einem elastomeren Material (76) gebildet ist, das eine Öffnung (78) dadurch vorsieht, wenn es durch eine Probe durchdrungen wird.

5. Reaktionsgittersystem nach einem der Ansprüche 1 bis 4, weiter mit einer Kopplungsfläche auf dem Gefäßerhalteteile und einer komplementären Kopplungsfläche (69) auf dem Abflußteil (35) zum abnehmbaren Befestigen des Abflußteiles an dem Gefäßerhalteteil und/oder einer Trennanordnung (121) mit einer Kopplungsfläche, die an der Kopplungsfläche des Gefäßerhalteteiles anbringbar ist, wobei die Trennanordnung (121) eine Mehrzahl von Produktsammelfläschchen (128) aufweist, die mit den Auslässen (49) des Gefäßerhalteteiles ausgerichtet sind, wenn das Abflußteil (35) von dem Gefäßerhalteteil entfernt ist und die Trennanordnung (121) an dem Gefäßerhalteteil angebracht ist, und/oder einem Lösungsliefersystem mit einem Feld von Proben entsprechend dem Feld von Verschlüssen in der Kappenanordnung (43), worin eine Probe mit jedem Verschluß zum selektiven Durchstoßen des Verschlusses zum Liefern von Flüssigkeit gleichzeitig zu jedem Reaktionsgefäß (12) ausgerichtet ist, und/oder einem Vakuumsystem (39), das verbindbar mit dem Abflußteil (35) zum Anlegen eines Vakuums daran zum Evakuieren von Fluiden davon und zum Anlegen eines Vakuums an die Trennanordnung (121) verbindbar ist zum Bewirken, daß Reaktionsprodukte in den Reaktionsgefäßen (12) zu den Sammelfläschchen (128) abfließen, und/oder einer Thermosteueranordnung, die neben den Reaktionsgefäßen zum Wärmen oder Kühlen der Inhalte der Gefäße angeordnet ist.

6. Reaktionsgittersystem nach Anspruch 1, bei dem das Gefäßerhalteteil besteht aus:
einem Verteilerblock (30) aus harzartigem Material mit einer oberen Oberfläche (45), einer unteren Oberfläche (46) und Seitenoberflächen (47);
einem Feld von ersten Durchgängen (50) durch den Block (30) von den Einlässen (48) an der oberen Oberfläche (45) zu den Auslässen (49) an der unteren Oberfläche (46);
einem Feld von zweiten Querdurchgängen (57), die sich durch den Block (30) erstrecken, wobei jeder zweite Querdurchgang (57) eine Mehrzahl der ersten Durchgänge (50) schneidet, wodurch die Einlässe (48) der ersten Durchgänge (50) jeweils eines der Reaktionsgefäße (12) aufnehmen und die zweiten Durchgänge (57) einen Zugriff zu der Mehrzahl von ersten Durchgängen (50) vorsehen zum Steuern des Flusses von Fluid von den Reaktionsgefäßen (12) heraus durch die Auslässe (49) in der unteren Oberfläche des Blockes (30), wobei sich die Ventilbetätigungsorgane (32) durch die zweiten Durchgänge erstrecken.

7. Reaktionsgittersystem nach Anspruch 6, weiter mit:
einem Abflußblock (34), der an dem Verteilerblock (30) angebracht ist, wobei der Abflußblock (34) mindestens einen Hohlraum (123) darin aufweist zum Aufnehmen von Fluid von den Reaktionsgefäßen (12), wenn Fluid in den Reaktionsgefäßen (12) zu den Auslässen (49) in dem Verteilerblock (30) fließt, wobei der Abflußblock (34) bevorzugt verbundene Kanäle (65) darin ausgerichtet mit den Auslässen (49) des Verteilerblockes (30) aufweist.

8. Reaktionsgittersystem nach Anspruch 7, weiter mit:
einem Fläschchenhalteteil (122) zum Koppeln an die untere Oberfläche des Verteilerblockes und zum Halten einer Mehrzahl von Fläschchen (128) in Ausrichtung mit den Auslässen (49) des Verteilerblockes (30), wobei das Fläschchenhalteteil (122) bevorzugt ein Trennblock (120) mit einem Hohlraum (123) darin ist, in dem die Fläschchen (128) aufgenommen sind.

9. Reaktionsgittersystem nach einem der Ansprüche 6 bis 8, weiter mit:
einem Thermoblock (40), der in einem Abstand von dem Verteilerblock (30) angeordnet ist zum Umgeben der Reaktionsgefäße (12), wenn die Reaktionsgefäße (12) in den Einlässen (48) des Verteilerblockes (30) angebracht sind, zum Steuern der Temperatur der Inhalte in den Reaktionsgefäßen.

10. Reaktionsgittersystem nach einem der Ansprüche 6 bis 9, weiter mit:
einer Kappenanordnung (43), die an dem Verteilerblock in einer beabstandeten Beziehung dazu angebracht ist, wobei die Kappenanordnung (43) Einlässe der Reaktionsgefäße (12) abdichtet, wenn die Reaktionsgefäße (12) in den Einlässen (48) des Verteilerblockes (30) angebracht sind, wobei bevorzugt ein Ventileinsatz in jedem der ersten Durchgänge (50) angebracht ist.

11. Reaktionsgittersystem nach einem der Ansprüche 8 bis 10, weiter mit:
einer Rührvorrichtung, bevorzugt ein Wirbeler (48) zum Rühren der Inhalte der Reaktionsgefäße (12) vor dem Übertragen der Inhalte zu den Sammelfläschchen (128), bevorzugt mit einer Anbringungsplatte (16) zum Tragen entweder des Abflußblockes (34) oder des Trennblockes (121) auf dem Rührer.

12. Fläschchenhalteblockanordnung in Kombination mit dem Reaktionsgittersystem von Anspruch 1 zum Aufnehmen einer Mehrzahl von Fläschchen (128), die in einem Feld angeordnet sind, zum Aufnehmen von Reaktionsprodukten von einem Feld von Reaktionsgefäßen (12), wobei die Fläschchenhalteblockanordnung (131) aufweist:
einen Block (120) mit einem Hohlraum (123) darin und eine Kopplungsfläche, wobei die Kopplungsfläche eine Abdichtung und Befestigungsmittel aufweist;
ein Fläschchengestell (122), das in dem Hohlraum (123) vorgesehen ist, wobei das Fläschchengestell (122) ein Feld von Löchern (131) zum Tragen der Fläschchen (128) aufweist; und
eine Öffnung in dem Block (120) in Verbindung mit dem Hohlraum (123), wobei, wenn ein Vakuum an die Öffnung angelegt wird, ein Teilvakuum in dem Hohlraum (123) entsteht zum Erleichtern des Flusses der Reaktionsprodukte von den Reaktionsgefäßen (12) zu den Fläschchen (128).

13. Anordnung nach Anspruch 12, bei der das Fläschchengestell (122) mindestens ein Greifteil aufweist, das sich davon erstreckt, zum Erleichtern des Zurückziehens des Gestelles (122) von dem Hohlraum (123) in dem Block (120).

14. Anordnung nach Anspruch 12, bei der das Fläschchengestell (122) zusammengesetzt ist aus einer oberen Platte (130) mit der Anordnung von Löchern (131) und einer unteren Platte (132), die von der oberen Platte (130) beabstandet ist, wobei die untere Platte (132) ein Feld von Vertiefungen (133) darin aufweist, die mit den Löchern (131) ausgerichtet sind, zum Aufnehmen der Böden der Fläschchen (148).

15. Anordnung nach Anspruch 10, bei der das Fläschchengestell (140) ein zusammengesetztes Gestell (140) mit mehr als einem Fläschchenhalteabschnitt (141-144) ist, wobei die Fläschchenhalteabschnitt (141-144) trennbar voneinander sind, wenn sie außerhalb des Hohlraumes (123) sind, jeder Fläschchenhalteabschnitt (141-144) bevorzugt einen eigenen Kode (158) darauf markiert aufweist, weiter mit einem Träger (145) für die Fläschchenhalteabschnitte (141-144), wobei der Träger (145) einen Kode (159) darauf speziell markiert aufweist, die Kodes bevorzugt Barkodes sind.

16. Anordnung nach Anspruch 15, bei der die Fläschchenhalteabschnitte ortsspezifische Kupplungen darauf aufweisen, die mit ortsspezifischen Kupplungen auf dem Träger (145) zusammenwirken, worin jeder Fläschchenhalteabschnitt (141-144) eine eindeutige Position auf dem Träger (145) aufweist, die ortsspezifischen Kupplungen bevorzugt Felder von Zapfen und Löchern (148) in dem Träger (145) und den Fläschchenhalteabschnitten (141-144) sind, die nur ausgerichtet sind, wenn die Abschnitte richtig in bezug auf den Träger (145) positioniert sind.

17. Reaktionsgittersystem zum Benutzen bei dem Ausführen von mehrfachen getrennten Reaktionen, wobei das Gitter aufweist:
ein Gefäßerhalteteil (30) in der Form eines Blockes aus Material mit einer Mehrzahl von ersten Durchgängen (50) dadurch, wobei jede Öffnung einen Einlaß (48) und einen Auslaß (49) aufweist, die durch ein Ventil (51) verbunden sind;
ein Feld von Reaktionsgefäßen (12) zum Anbringen individuell in den Einlässen (48) der Öffnungen (50);
ein Abflußteil (35), das mit dem Gefäßerhalteteil verknüpft ist, wobei das Abflußteil ein Abflußfeld darin aufweist, das mit den Auslässen (49) der Öffnungen (50) ausgerichtet ist; und mindestens ein Ventilbetätigungsorgan (32) in der Form einer Stange zum Betätigen mindestens mehrerer Ventile (51) gleichzeitig zum Öffnen der Ventile zum Abfließen von Fluiden aus dem Feld von Reaktionsgefäßen (12) in das Abflußteil (35);
eine Kopplungsfläche auf dem Gefäßerhalteteil (30) und eine komplementäre Kopplungsfläche (69) auf dem Abflußteil (35) zum lösbaren Befestigen des Abflußteiles an dem Gefäßerhalteteil; eine Trennanordnung (121) mit einer Kopplungsfläche, die an der Kopplungsfläche des Gefäßerhalteteiles anbringbar ist, wobei die Trennanordnung (121) eine Mehrzahl von Reaktionsproduktsammelfläschchen (128) aufweist, die mit den Auslässen (49) des Gefäßerhalteteiles ausgerichtet sind, wenn das Abflußteil (35) von dem Gefäßerhalteteil abgenommen ist und die Trennanordnung (121) an dem Gefäßerhalteteil angebracht ist;
ein Lösungsliefersystem mit einem Feld von Proben entsprechend dem Feld von Reaktionsgefäßen, worin eine Probe mit jedem Reaktionsgefäß ausgerichtet ist zum Liefern von Flüssigkeit gleichzeitig zu jedem Reaktionsgefäß (12); und
ein Vakuumsystem (39), das mit dem Abflußteil (35) verbindbar ist, zum Anlegen eines Vakuums daran zum Evakuieren von Fluiden davon und zum Anlegen eines Vakuums an die Trennanordnung (121) zum Bewirken, daß Reaktionsprodukte in den Reaktionsgefäßen (12) in die Sammelfläschchen (128) abfließen.

18. Reaktionsgittersystem nach Anspruch 7, weiter mit einer Thermosteueranordnung (40), die benachbart zu den Reaktionsgefäßen angeordnet ist, zum Erwärmen oder Kühlen der Inhalte der Gefäße.

19. Reaktionsgittersystem nach einem der Ansprüche 17 und 18, weiter mit einer Kappenanordnung (43), die an dem Verteilerblock (30) in einer beabstandeten Beziehung dazu angebracht ist, wobei die Kappenanordnung (43) die Einlässe der Reaktionsgefäße (12) abdichtet, wenn die Reaktionsgefäße (12) in den Einlässen (48) des Verteilerblockes (30) angebracht sind, bevorzugt ein Ventileinsatz in jedem der ersten Durchgänge (50) angebracht ist.

20. Reaktionsgittersystem nach einem der Ansprüche 17 bis 19, weiter mit einer Rührvorrichtung, bevorzugt ein Wirbeler (18) zum Rühren der Inhalte der Reaktionsgefäße (12) vor der Übertragung der Inhalte zu den Sammelfläschchen (128), bevorzugt mit einer Anbringungsplatte (16) zum Tragen entweder des Abflußblockes (34) oder des Trennblockes (121) auf dem Rührer.

21. Fläschchenhalteblockanordnung in Kombination mit dem Reaktionsgittersystem von Anspruch 17 zum Aufnehmen einer Mehrzahl von Fläschchen (128), die in einem Feld angeordnet sind, zum Aufnehmen von Reaktionsprodukten von einem Feld von Reaktionsgefäßen (12), wobei die Fläschchenhalteblockanordnung (121) aufweist:
einen Block (20) mit einem Hohlraum (23) darin und einer Kopplungsfläche, wobei die Kopplungsfläche eine Abdichtung und Befestigungsmittel aufweist;
ein Fläschchengestell (122), das in dem Hohlraum (123) vorgesehen ist, wobei das Fläschchengestell (122) ein Feld von Löchern (131) zum Tragen der Fläschchen (128) aufweist; und
eine Öffnung in dem Block (120), die in Verbindung mit dem Hohlraum (123) steht, wodurch, wenn ein Vakuum an die Öffnung angelegt wird, ein Teilvakuum in dem Hohlraum (123) auftritt zum Erleichtern des Flusses der Reaktionsprodukte von den Reaktionsgefäßen (12) zu den Fläschchen (148).

22. Anordnung nach Anspruch 21, bei der das Fläschchengestell (122) mindestens ein Greifteil aufweist, das sich davon erstreckt, zum Erleichtern des Zurückziehens des Gestelles (122) von dem Hohlraum (123) in dem Block (122).

23. Anordnung nach Anspruch 21, bei der das Fläschchengestell (122) aus einer oberen Platte (130) mit der Anordnung von Löchern (131) darin und einer unteren Platte (122) in einem Abstand von der oberen Platte (130) zusammengesetzt ist, wobei die unteres Platte (132) ein Feld von Vertiefungen (133) darin aufweist, die mit den Löchern (131) ausgerichtet sind, zum Aufnehmen der Böden der Fläschchen (149).

24. Anordnung nach Anspruch 21, bei der das Fläschchengestell (122) ein zusammengesetztes Gestell (140) mit mehr als einem Fläschchenhalteabschnitt (141-144) ist, wobei die Fläschchenhalteabschnitte (141-144) voneinander trennbar sind, wenn sie außerhalb des Hohlraumes (123) sind, jeder Fläschchenhalteabschnitt (141-144) bevorzugt einen eigenen Kode (158) darauf markiert aufweist, weiter mit einem Träger (145) für die Fläschchenhalteabschnitte (141-144), wobei der Träger (145) einen Kode (159) speziell darauf markiert aufweist, wobei die Kodes bevorzugt Barkodes sind.

25. Anordnung nach Anspruch 24, bei der die Fläschchenhalteabschnitte ortsspezifische Kupplungen darauf aufweisen, die mit ortsspezifischen Kupplungen auf dem Träger zusammenwirken, worin jeder Fläschchenhalteabschnitt (141-144) eine eindeutige Position auf dem Träger (145) aufweist, die ortsspezifischen Kupplungen bevorzugt Felder von Zapfen auf und Löchern (148) in den Trägern (145) und den Fläschchenhalteabschnitten (141-144) sind, die nur ausgerichtet sind, wenn die Abschnitte richtig in bezug auf den Träger (145) positioniert sind.

## Revendications

1. Système de réseau réactionnel pour utilisation dans la conduite de réactions séparées multiples, ledit réseau comprenant :
un élément de support de récipient comprenant une pluralité d'ouvertures (50) le traversant, chaque ouverture comprenant une entrée (48) et une sortie (49) connectées par l'intermédiaire d'une vanne (51);
une pluralité de récipients de réaction (12) pour montage individuel dans les entrées (48) des ouvertures (50) ;
un élément d'évacuation (35) associé à l'élément de support de récipient, l'élément d'évacuation comprenant une zone d'évacuation alignée avec les sorties (49) des ouvertures (50) ; et
au moins un opérateur de vanne (32) sous la forme d'une tige (55) pour commander au moins plusieurs des vannes (51) simultanément sous l'effet du mouvement de la tige (55) pour ouvrir les vannes (51) afin d'évacuer les liquides des récipients de réaction (12) dans l'élément d'évacuation ;
dans lequel l'élément de support de récipient est un bloc de matériau et les ouvertures (50) sont des premiers passages (50) à travers le matériau.

2. Système de réseau réactionnel selon la revendication 1, dans lequel ladite pluralité d'entrées (48) sont disposées sous forme de matrice d'au moins deux colonnes et d'au moins deux rangées et le nombre de canaux (65) dans ledit élément d'évacuation (35) est égal au nombre de rangées dans ladite matrice, dans lequel chaque entrée (48) dans une rangée donnée de ladite matrice communique avec un seul canal (65), chacun desdits canaux (65) dans l'élément d'évacuation étant, de préférence, en communication liquide avec un canal principal, dans lequel ledit canal principal assure la communication liquide entre chacun desdits canaux (65) et au moins un connecteur de sortie (66).

3. Système de réseau réactionnel selon la revendication 1, dans lequel l'opérateur de vanne (32) comprend des parties formant vanne dans une tige (55), les parties formant vanne étant des ouvertures espacées (56) dans les tiges (55) qui, lorsqu'elles sont alignées avec les entrées (48) et les sorties (49) permettent au liquide de passer à travers et, lorsqu'elles sont désalignées, bloquent le passage de liquide, la tige (55) étant de préférence entraînée en rotation pour aligner et désaligner les ouvertures avec les passages (50), les vannes (51) étant de préférence formées par des sièges dans chacun des premiers passages (50), les sièges comprenant chacun des orifices de précision s'étendant radialement (54) formés dans ceux-ci pour recevoir les parties formant vanne précisément formées des tiges (5) et comprenant des orifices s'étendant axialement pour permettre la circulation de liquide à travers les sièges (48), la circulation de liquide étant contrôlée par les parties formant vanne des tiges (55).

4. Système de réseau réactionnel selon la revendication 1, dans lequel le réseau réactionnel comprend également un ensemble d'obturation (43) associé à celui-ci pour fermer simultanément chaque récipient de réaction (12) avec une partie de fermeture, ladite partie de fermeture étant configurée pour recevoir du liquide lorsqu'elle est pénétrée, étant de préférence en matériau élastomère (76), fournissant une ouverture (78) dans celle-ci lorsqu'elle est percée par une sonde.

5. Système de réseau réactionnel selon l'une des revendications 1 à 4, comprenant également une face de couplage sur l'élément de support de récipient et une face de couplage complémentaire (69) sur l'élément d'évacuation (35) pour fixer de façon amovible l'élément d'évacuation à l'élément de support de récipient, et/ou un ensemble de séparation (121) comprenant une face de couplage pouvant être fixée à la face de couplage de l'élément de support de récipient, l'ensemble de séparation (121) comprenant une pluralité de flacons de collecte de produits de réaction (128) alignés avec les sorties (49) de l'élément de support de récipient lorsque l'élément d'évacuation (35) est séparé de l'élément de support de récipient et l'ensemble de séparation (121) est fixé à l'élément de support de récipient, et/ou un système de distribution de solvant comprenant une matrice de sondes correspondant à la matrice des fermetures dans l'ensemble d'obturation (43), dans lequel une sonde est alignée avec chaque fermeture pour pénétrer sélectivement cette fermeture pour délivrer du liquide simultanément dans chaque récipient de réaction (12), et/ou un système de vide (39) pouvant être connecté à l'élément d'évacuation (35) pour appliquer un vide à ceux-ci pour en évacuer les liquides et pour appliquer un vide à l'ensemble de séparation (121) pour amener les produits de réaction dans les récipients de réaction (12) à s'écouler dans les flacons de collecte (129) et/ou un dispositif de contrôle thermique contigu aux récipients de réaction pour chauffer ou refroidir le contenu des récipients de réaction.

6. Système de réseau réactionnel selon la revendication 1, dans lequel ledit élément de support de récipient est :
un bloc collecteur (30) de matériau en résine comprenant une surface supérieure (45), une surface inférieure (46) et des surfaces latérales (47) ;
la matrice de premiers passages (50) traversant le bloc (30) depuis les entrées (48) au niveau de la surface supérieure (45) jusqu'aux sorties (49) au niveau de la surface inférieure (46) ;
une matrice de deuxièmes passages transversaux (57) s'étendant à travers le bloc (30), chaque deuxième passage transversal (57) croisant une pluralité de premiers passages (50), grâce à quoi les entrées (48) des premiers passages (50) reçoivent chacun un des récipients de réaction (12) et les seconds passages (57) fournissent un accès à des pluralités de premiers passages (50) pour contrôler la circulation de liquide depuis les récipients de réaction (12) par les sorties (49) dans la surface inférieure du bloc (30), les opérateurs de vanne (32) s'étendant à travers les deuxièmes passages.

7. Système de réseau réactionnel selon la revendication 6 comprenant également :
un bloc d'évacuation (34) fixé au bloc collecteur (30), le bloc d'évacuation (34) comprenant au moins une cavité (123) pour recevoir du liquide provenant des récipients de réaction (12) lorsque le liquide contenu dans les récipients de réaction (12) s'écoule par les sorties (49) dans le bloc collecteur (30), le bloc d'évacuation (34) comprenant, de préférence, des canaux interconnectés (65) alignés avec les sorties (49) du bloc collecteur (30).

8. Système de réseau réactionnel selon la revendication 7 comprenant également:
un élément de support de flacons (122) pour couplage avec la surface inférieure du bloc collecteur et pour contenir une pluralité de flacons (129) alignés avec les sorties (49) du bloc collecteur (30), l'élément de support de flacons (122) étant de préférence un bloc de séparation (120) comprenant une cavité (123) dans laquelle les flacons (128) sont installés.

9. Système de réseau réactionnel selon l'une des revendications 6 à 8, comprenant également:
un bloc thermique (40) maintenu espacé du bloc collecteur (30) pour entourer les récipients de réaction (12) lorsque les récipients de réaction (12) sont montés dans les entrées (48) du bloc collecteur (30) pour contrôler la température du contenu des récipients de réaction.

10. Système de réseau réactionnel selon l'une des revendications 6 à 9 comprenant également:
un ensemble d'obturation (43) fixé au bloc collecteur (30) en étant espacé avec celui-ci, l'ensemble d'obturation (43) bouchant les entrées des récipients de réaction (12) lorsque les récipients de réaction (12) sont montés dans les entrées (48) du bloc collecteur (30), avec, de préférence, un siège de vanne dans chacun des premiers passages (50).

11. Système de réseau réactionnel selon l'une des revendications 8 à 10 comprenant également:
un dispositif d'agitation, de préférence un générateur de tourbillons (18) pour agiter le contenu des récipients de réaction (12) avant de transférer le contenu des flacons de collecte (128), comprenant de préférence un plateau de montage (16) pour supporter le bloc d'évacuation (34) ou le bloc de séparation (121) sur l'agitateur.

12. Ensemble de bloc de support de flacons en association avec le système de réseau réactionnel de la revendication 1 pour contenir une pluralité de flacons (128) disposés dans une matrice pour recevoir des produits de réaction provenant d'une matrice de récipient de réaction (12), l'ensemble de bloc de support de flacons (121) comprenant
un bloc (120) comprenant une cavité (123) et une face de couplage, la face de couplage comprenant des moyens d'étanchéité et de fixation ;
un porte-flacons (122) disposé dans la cavité (123), le porte-flacons (122) comprenant une matrice de trous (131) pour supporter les flacons (128) ; et
un connecteur dans le bloc (120) en communication avec la cavité (123), grâce auquel, lorsqu'un vide est appliqué au connecteur, un vide partiel est appliqué dans la cavité (123) pour faciliter la circulation des produits de réaction depuis les récipients de réaction (12) vers les flacons (148).

13. Ensemble selon la revendication 12, dans lequel le porte-flacons (122) comprend au moins un élément de prise s'étendant depuis celui-ci pour faciliter le retrait du porte-flacons (122) de la cavité (123) dans le bloc (120).

14. Ensemble selon la revendication 12, dans lequel le porte-flacons (122) est constitué d'un plateau supérieur (130) avec un arrangement de trous (131) et un plateau inférieur (132) espacé du plateau supérieur (130), le plateau inférieur (132) comprenant une matrice d'empreintes (133) alignées avec les trous (131) pour installer les bases des flacons (148).

15. Ensemble selon la revendication 12, dans lequel le porte-flacons (122) est un porte-flacons composite (140) comprenant plusieurs sections de porte-flacons (141 à 144), les sections de support de flacons (141 à 144) étant séparables les unes des autres lorsqu'elles sont hors de la cavité (123), chaque section de porte-flacons (141 à 144) possédant de préférence un code différent (158) marqué sur celle-ci, comprenant également un support (145) pour les sections de support de flacons (141 à 144), le support (145) possédant un code (159) spécifique marqué sur celui-ci, les codes étant de préférence des codes à barres.

16. Ensemble selon la revendication 15, dans lequel les sections de support de flacon comprennent des couplages spécifiques des emplacements qui fonctionnent en coopération avec des couplages spécifiques des emplacements sur le support (145), dans lequel chaque section de support de flacons (141 à 144) possède une position unique sur le support (145), les couplages spécifiques des emplacements étant de préférence des matrices de broches sur et des trous (148) dans le support (145) et les sections de support de flacon (141 à 144) qui ne sont alignés que lorsque les sections sont correctement positionnées par rapport au support (145).

17. Système de réseau réactionnel pour utilisation dans la conduite de réactions séparées multiples, ledit réseau comprenant
un élément de support de récipient (30) sous la forme d'un bloc de matériau comprenant une pluralité de premiers passages (50) le traversant, chaque ouverture comprenant une entrée (48) et une sortie (49) connectées par l'intermédiaire d'une vanne (51) ;
une matrice de récipient de réaction (12) pour être montée individuellement dans les entrées (48) des ouvertures (50) ;
un élément d'évacuation (35) associé à l'élément de support de récipient, l'élément d'évacuation comprenant une zone d'évacuation alignée avec les sorties (49) des ouvertures (50) ; et
au moins un opérateur de vanne (32) sous la forme d'une tige pour commander au moins plusieurs des vannes (51) simultanément pour ouvrir les vannes afin d'évacuer les liquides de la matrice de récipient de réaction (12) dans l'élément d'évacuation (35) ;
une face de couplage sur l'élément de support de récipient (30) et une face de couplage complémentaire (69) sur l'élément d'évacuation (35) pour fixer de façon amovible l'élément d'évacuation à l'élément de support de récipient ;
un ensemble de séparation (121) comprenant une face de couplage pouvant être fixée à la face de couplage de l'élément de support de récipient, l'ensemble de séparation (121) comprenant une pluralité de flacons de collecte de produits de réaction (128) alignés avec les sorties (49) de l'élément de support de récipient lorsque l'élément d'évacuation (35) est séparé de l'élément de support de récipient et l'ensemble de séparation (121) est fixé à l'élément de support de récipient ;
un système de distribution de solvant comprenant une matrice de sondes correspondant à la matrice de récipient de réaction, dans lequel une sonde est alignée avec chaque récipient de réaction pour distribuer sélectivement et simultanément du liquide dans chaque récipient de réaction (12) et
un système de vide (39) pouvant être connecté à l'élément d'évacuation (35) pour lui appliquer un vide afin d'évacuer les liquides et appliquer un vide à l'ensemble de séparation (121) afin d'amener les produits de réaction dans les récipients de réaction (12) à s'écouler dans les flacons de collecte (128).

18. Système de réseau réactionnel selon la revendication 17 comprenant également un arrangement de contrôle thermique (40) juxtaposé aux récipients de réaction pour chauffer ou refroidir le contenu des récipients de réaction.

19. Système de réseau réactionnel selon l'une des revendications 17 et 18 comprenant également un ensemble d'obturation (43) fixé au bloc collecteur (30) en étant espacé avec celui-ci, l'ensemble d'obturation (43) bouchant les entrées des récipients de réaction (12) lorsque les récipients de réaction (12) sont montés dans les entrées (48) du bloc collecteur (30), avec, de préférence, un siège de vanne dans chacun des premiers passages (50).

20. Système de réseau réactionnel selon l'une des revendications 17 à 19 comprenant également un dispositif d'agitation, de préférence un générateur de tourbillons (18) pour agiter le contenu des récipients de réaction (12) avant de transférer le contenu des flacons de collecte (128), comprenant de préférence un plateau de montage (16) pour supporter le bloc d'évacuation (34) ou le bloc de séparation (121) sur l'agitateur.

21. Ensemble de bloc de support de flacons en association avec le système de réseau réactionnel de la revendication 17 pour contenir une pluralité de flacons (128) disposés dans une matrice pour recevoir des produits de réaction provenant d'une matrice de récipient de réaction (12), l'ensemble de bloc de support de flacons (121) comprenant
un bloc (120) comprenant une cavité (123) et une face de couplage, la face de couplage comprenant des moyens d'étanchéité et de fixation ;
un porte-flacons (122) disposé dans la cavité (123), le porte-flacons (122) comprenant une matrice de trous (131) pour supporter les flacons (128) ; et
un connecteur dans le bloc (120) en communication avec la cavité (123), grâce auquel, lorsqu'un vide est appliqué au connecteur, un vide partiel est appliqué dans la cavité (123) pour faciliter la circulation des produits de réaction depuis les récipients de réaction (12) vers les flacons (148).

22. Ensemble selon la revendication 21, dans lequel le porte-flacons (122) comprend au moins un élément de prise s'étendant depuis celui-ci pour faciliter le retrait du porte-flacons (122) de la cavité (123) dans le bloc (120).

23. Ensemble selon la revendication 21, dans lequel le porte-flacons (122) est constitué d'un plateau supérieur (130) avec un arrangement de trous (131) et un plateau inférieur (132) espacé du plateau supérieur (130), le plateau inférieur (132) comprenant une matrice d'empreintes (133) alignées avec les trous (131) pour installer les bases des flacons (148).

24. Ensemble selon la revendication 21, dans lequel le porte-flacons (122) est un porte-flacons composite (140) comprenant plusieurs sections de support de flacons (141 à 144), les sections de support de flacons (141 à 144) étant séparables les unes des autres lorsqu'elles sont hors de la cavité (123), chaque section de support de flacons (141 à 144) possédant de préférence un code différent (158) marqué sur celle-ci, comprenant également un support (145) pour les sections de support de flacons (141 à 144), le support (145) possédant un code (159) spécifique marqué sur celui-ci, les codes étant de préférence des codes à barres.

25. Ensemble selon la revendication 24, dans lequel les sections de support de flacon comprennent des couplages spécifiques des emplacements qui fonctionnent en coopération avec des couplages spécifiques des emplacements sur le support (145), dans lequel chaque section de support de flacons (141 à 144) possède une position unique sur le support (145), les couplages spécifiques des emplacements étant de préférence des matrices de broches sur et des trous (148) dans le support (145) et les sections de support de flacon (141 à 144) qui ne sont alignés que lorsque les sections sont correctement positionnées par rapport au support (145).
